# EUROPEAN PATENT SPECIFICATION

(11) **EP 1 662 113 B1**
(45) Date of publication and mention of the grant of the patent: **21.11.2012**
(21) Application number: 05027548.6
(22) Date of filing: 10.04.1994
(51) Int. Cl.: F02M 57/06, F02M 61/08, F02M 63/00, F02M 27/02, F02M 25/12, F02M 31/16, F02B 17/00, F02B 43/10, C01B 3/38

(54) **Apparatus for operation of engines**
Vorrichtung zur Verbrennungsmotor Betrieb
Procédé et appareil pour un fonctionnement amélioré de moteurs

(43) Date of publication of application: 31.05.2006
(62) Divisional of application: 94920655.1
(73) Proprietor: McAlister, Roy E., Mesa, AZ 85202 (US)
(72) Inventor: McAlister, Roy E., Mesa, AZ 85202 (US)
(74) Representative: Beattie, Alex Thomas Stewart

(56) References cited:
- EP-A1- 0 463 730
- DE-A1- 3 443 022
- GB-A- 1 002 694
- GB-A- 1 038 490
- US-A- 1 451 384
- US-A- 3 980 061
- US-A- 4 982 708

## Description

This invention relates to improved operation of internal combustion engines and vehicles powered by such engines.

### BACKGROUND OF THE INVENTION:

There is about one motor vehicle for every eleven persons on Earth. More than 400 million cars and trucks are operated throughout the world. Homogeneous-charge engines power the vast majority of motor vehicles. In these engines it is attempted to develop a homogeneous mixture of air and fuel vapor by fuel injection or carburation into an intake manifold for delivery to the engine's combustion chambers. Homogeneous-charge engines present numerous problems including:
1. Unburned hydrocarbons and carbon monoxide emissions are unacceptable from homogeneous-charge engines. These emissions are caused by uncontrolled burning and quenching of homogeneous-charge combustion processes near combustion-chamber walls. All major cities are polluted by oxides of nitrogen, carbon monoxide, and unburned hydrocarbons from homogeneous-charge engines.
2. Another cause of unburned hydrocarbons and carbon monoxide from homogeneous-charge engines is operation at insufficient air to fuel ratios to complete combustion processes at the relatively high piston speeds of modem cars. It is a widespread practice to operate the engine at air-fuel ratios for best power production in spite of the fact that operation at excess-air conditions would produce less unburned hydrocarbons and carbon-monoxide emissions.
3. Oxides of nitrogen emissions are unacceptable from homogeneous-charge engines. Increasing the air to fuel ratio as in homogeneous-charge "lean burn" operations increases production of oxides of nitrogen to the point of reaching excess air to fuel ratios that are difficult to ignite.
4. Several catalytic processes and an auxiliary air supply are needed to clean-up the exhaust streams of homogeneous-charge engines. Modern cars operating at air-fuel ratios optimized for driveability and minimal oxides of nitrogen require addition of airto the exhaust stream for purposes of catalytic combustion of unburned hydrocarbons and carbon monoxide.
5. Energy waste occurs as a great percentage of the fuel present in a homogeneous charge burns near combustion chamber surfaces, Heat is lost by transfer to the head, valves, cylinder, piston, and rings without doing useful work.
6. Homogeneous-charge engines must be limited in compression ratio to values that prevent detonating ignition and piston damage. Positive ignition is achieved by spark plugs.

Technology which has been accepted for improving the thermal efficiency of internal combustion engines includes the venerable Diesel engine apparatus which relies upon direct injection of fuel into the combustion chamber. This technology is characterized as compressing air to produce sufficiently high temperatures to evaporate, chemically crack, and ignite fuel that is sprayed into the compressed air. Such technology requires fuels with specific characteristics that facilitate "compression ignition". Fuels suitable for compression ignition engines have high "cetane" ratings. Direct-injection, compression-ignition engines often obtain about two times higher miles per fuel-BTU ratings than homogeneous-charge engines in practical duty cycles because of stratiried-charge advantages of more complete combustion and reduced heat losses from combustion products to engine components.

A substantial problem with the compression ignition engine is the engine weight penalty that stems from requiring about two times more displacement than spark ignited engines of equal power ratings. In operation, this translates to requirements for a much larger crankshaft, a larger flywheel, a larger engine block, larger bearings, larger starter motors, heavier-duty batteries, larger tires, heavier springs, bigger shock absorbers, and a much larger requirement for critical alloying resources such as molybdenum, chromium, vanadium, copper, nickel, tin, lead, antimony, and the content of manufacturing energy to mine, refine, cast, heat treat and machine Diesel engines than-spark-ignited engines. Other difficult if not unacceptable problems include:
1. Diesel engines are notorious for belching clouds of black smoke during stop-and-go duty cycles. Bus and truck emissions of nauseous, burned-oil smelling, black smoke in city traffic are unacceptable in view of recent efforts by virtually every city of the world to find relief from atmospheric pollution due to emissions from motor vehicles.
2. Diesel engines are extremely difficult to convertto oxygenated fuels (CH₃OH, C₂H₅OH, etc.) or other clean burning fuels (such as natural gas and hydrogen) because such preferred fuels have high octane ratings and low cetane ratings. Diesel engines require a high cetane rated pilot fuel (Diesel fuel) to torch-ignite clean burning fuels that are "fumigated" into the combustion chamber along with air supplies during intake cycle operations.
3. Fumigation of fuels into the combustion chamber along with air during the intake cycle de-rates the engine because the fumigated fuel uses part of the breathing capacity and reduces effective volumetric efficiency of the converted engine.
4. Compression ignition engines are hard to start in cold weather. Cold air and cold engine components rob the heat of compression before temperatures are reached that will cause fuel to be evaporated, chemically cracked, and ignited. Expensive subsystems such as spark-ignited starter engines, glow plugs, electric block heaters, and starter fluid dispensers are used in attempts to overcome the difficulties of starting compression-ignition engines in cold weather. Frequently owners of vehicles with compression-ignition engines opt to keep the engine running day and night in the cold season at whatever fuel expense is incurred rather undergo the ordeal of trying to start a Diesel engine in cold weather.
5. Compression-ignition engines operate best in a narrow range of torque-speed conditions. This is because of the characteristic called Diesel-ignition delay and the requirement to tailor the amount of fuel introduced and timing of fuel introduction with respect to the piston speed in order to avoid needless if not damaging pressure rise during the compression cycle and to avoid energy waste and smoke from late burning during the power cycle.
6. Compression-ignition engines require the use of high cetane fuels with carbon to hydrogen mass ratios of about
7. Such fuels and their products of combustion have large radiant energy losses to combustion chamber walls during burning processes. It would greatly improve thermal efficiency to use cleaner burning fuels that have lower carbon to hydrogen mass ratios and much lower radiant energy losses but such fuels cannot be compression ignited in conventional engines.
7. Friction losses are larger in longer stroked, higher compression, and larger bearing area Diesel engines than in spark-ignited engines of the same power rating. In addition to robbing potential power this requires more investment in expensive alloys, case hardening, heat treatment and wear reducing design considerations than required for spark-ignition engines.

Technology for combining the advantages of spark ignition and stratified charge burning have been demonstrated. U.S. Patents 3,173,409; 3,830,204; 3,094,974; 3,316,650; 3,682,142; 4,003,343; 4,046,522; 4,086,877; 4,086,878; 4,716,859; 4,722,303; 4,967,409; and the references cited therein disclose methods and apparatus for producing or introducing fuel directly into the combustion chamber to form a stratified charge mixture of spark-ignitable fuel and ignition of such stratified charges by a spark source. Other published references include "Fuel Injection and Positive Ignition - A Basis For Improved Efficiency and Economy, Burning a Wide Range of Fuels in Diesel Engine by Davis, C.W.; Barber, E.M.; and Mitchel, Edward, SAE Propress in Technology Review Vol. II: Society of Automotive Engineers, New York, NY 10017,1967, pp. 343-357; "Deutz Converts Operation By Adding High-Tension Ignition System" by Finsterwalder, Gerhard, Automotive Engineering, Dec. 1971, pp. 28-32. Institute of Mechanical Engineers Conference Proceedings, Fuel Economy and Emissions of Lean Burn Engines, 1 Mech E Conference Publications; Mechanical Engineering Publications, Ltd., London, 1979; Institute of Mechanical Engineers Conference Proceedings, Stratified Charge Engines, 1 Mechanical Engineering Conference Publications 1976,; Mechanical Engineering Publications, Ltd., London, 1977; "An Update of the Direct Injected Stratified Charge Rotary Combustion Engine Developments at Curtiss-Wright: by Jones, Charles; Lamping, H.D.; Myers, D.M.; and Lloyd, R.W., SAE International Automotive Engineering Congress and Exposition, Paper No. 770044, Feb. 1977; Society of Automotive Engineers, New York, NY, 1977; "An Update of Applicable Automotive Engine Rotary Stratified Charge Developments" by Jones, Charles, SAE Technical Paper Series No. 820347; Society of Automotive Engineers, Warrendale, PA,1982; "Multi-Fuel Rotary Enginefor General Aviation Aircraft" By Jones, Charles; Ellis, David; and Meng, P. R., NASA Technical Memorandum 83429. AIAA-u3-1340; National Aeronautics and Space Administration, Washington, D.C., June, 1983. Such prior art suggests the use of lower compression ratios than required for compression ignition engines and it is inferred that engine weight savings would be offered along with a wider range of operation with respectto piston speed and torque requirements. Common problems that such systems present include:
1. Fuel must be mixed with air and delivered In spark ignitable proportions in the spark gap of a spark source at the exact time needed to initiate combustion. This is difficult because of varying degrees of fuel deflection as a result of widely varying velocities of air entry and swirl in the combustion chamber as piston speeds range from idle to full power.
2. Fuel directed towards the spart source from the fuel injector for purposes of producing a suitable mixture of fuel and air for spark ignition invariably reach metallic heat-robbing areas of the combustion chamber around the spark source. This results in combustion process quenching and heat losses through components of the combustion chamber.
3. Spark sources such as spark plugs are prone to fail because of oxidation and excessive heating due to the location they are placed as a result of efforts to place the spark gap as far into combustion zone of the combustion chamber as possible.
4. Spark sources are also prone to become soot coated during portions of the duty cycle and subsequently fail to deliver adequate plasma energy for assured ignition.
5. Widely varying emissions such as hydrocarbons, carbon monoxide,and soot at certain speeds and loads along with excessive oxides of nitrogen at other speeds characterize operation with relatively inert fuels at essential portions of the stop-and-go, city-driving duty cycle such as low-speed acceleration, transient conditions, and full power.
6. Efforts to overcome the problems arising from undesirable fuel-air ratios at the spark source during important portions of the duty cycle have resulted in efficiency-sacrificing practices of air throttling. (See "Exhaust Emission Control By the Ford Programmed Combustion Process: PROCO" by Simko, A.; Choma, M.A.; and Repko, L.L.; SAE Paper No 720052, Society of Automotive Engineers, New York, NY).

Another aspect of the problem with such prior art efforts has been the characteristic of requiring complicated, expensive, and highly tuned systems that are adapted to specific fuel properties in order to provide vehicle driveability and to achieve emissions of incomplete combustion and oxides of nitrogen that are acceptable to catalytic clean-up processes in the exhaust stream.

Steam reforming and partial oxidation of hydrocarbons are well-known methods for producing hydrogen. Catalytic steam reforming of light hydrocarbons including natural gas, coal-tar liquids, and petroleum liquids is the least expensive method presently available for producing hydrogen. The use of hydrogen as fuel in heat-engines offers attractive characteristics, particularly including high thermal efficiencies and almost no pollutive emissions.

Efforts to provide technology for reducing the problem of incomplete combustion and to improve thermal efficiency with clean burning hydrogen include the following publications. See U.S. Patents 4,253,428; 4,362,137; 4,181,100; 4,503,813; 4,515,135; 4,441,469; "Partial Hydrogen Injection Into Internal Combustion Engines Effect On Emissions and Fuel Economy"; by Breshears, R.; Cotrill, H.; and Rupe, J.; Jet Propulsion Laboratories and California Institute of Technology, Pasadena, CA, 1974; "Dissociated Methanol As A Consumable Hydride for Automobiles and Gas Turbines", by Finegold, Joseph G., McKinnon, J. Thomas, and Karpuk, Michael E., June 17, 1982, Hydrogen Energy Progress IV, pp.1359-1369; "Hydrogen Production From Water By Means of Chemical Cycles", by Glandt, Eduardo D., and Myers, Allan L., Department of Chemical and Biochemical Engineering, University of Pennsylvania, Philadelphia, PA 19174; Industrial Engineering Chemical Process Development, Vol. 15, No. 1, 1976; "Hydrogen As A Future Fuel, by Gregory, D.P., Institute of Gas Technology; "On-Board Hydrogen Generator For A Partial Hydrogen Injection I.C. Engine", by Houseman, John, and Cerini, D.J., SAE Paper No. 740600, Society of Automotive Engineers; New York, NY; "On-Board Steam Reforming of Methanol To Fuel The Automotive Hydrogen Engine", by Kester, F.L., Konopta, A.J., and Camara, E. H., I.E.C.E.C. Record - 1975, pp, 1176-1183; "Parallel Induction: A Simple Fuel Control Method For Hydrogen Engines", by Lynch, F.E., Hydrogen Energy Progress IV, June 17, 1982, pp. 1033-1051; "Electronic Fuel Injection Techniques For Hydrogen-Powered 1.C. Engines:, by MacCarley, C.A., and Van Vorst, W.D., International Journal of Hydrogen Energy, Vol. 5, No. 2, Mar. 31, 1980, pp. 179-205.

Definite advantages have been demonstrated by adding hydrogen to hydrocarbon fuels in spark-ignited and in compression-ignited engines. Combustion is more complete and radiation losses are reduced by decreasing the carbon to hydrogen mass ratio. Difficult and notorious problems include low fuel-storage density, back-firing in the intake system, reduced air-breathing capacity as hydrogen contains much less energy per volumetric measure than gasoline and other hydrocarbon vapors, reduced engine-power ratings, and an increased danger of fire in underhood and hydrogen storage areas. In addition to powering transportation vehicles, internal combustion engines power many stationery devices. Rising electric rates and urgent needs to improve the air quality in heavily populated areas provide an important opportunity for internal combustion engine powered electric generators and air conditioning systems. Total energy, cogeneration, and hot-tap engine drive systems generally connotate on-site use of the heat rejected by an engine along with the shaft energy to reduce the overall energy consumption and pollutive load on the environment by 40% to 75%. Such systems usually consist of an internal combustion engine, waste heat recovery exchangers to safety interface potable water with cooling jacket water and exhaust gases, and a driven load such as an electric generator or a heat-pump compressor. Problems with such systems include low thermal efficiency of the internal combustion engine, inadequate heat recovery from the heat exchangers and inadequate life of engines. Corollaries of the last mentioned problem are unacceptable maintenance requirements and high repair expenses.

DE3443022 discloses, in order to prevent knocking with maximum utilization of fuel, a transistor ignition system having at least one spark plug which is provided with a pressure sensor for detecting pressure peaks in the associated cylinder of the engine. The pressure sensor acts on an electronically controlled device which determines the ignition time of the spark plug.

### SUMMARY OF THE INVENTION

Accordingly, one aspect of the present invention provides a combined fuel ignition and spark ignition device adapted to be received in an opening to a combustion chamber of a cylinder of an internal combustion piston engine for injection of fuel into said chamber, said device comprising a passageway through which fuel may pass to enter said chamber, said passageway incorporating valve means to control flow of fuel therethrough and terminating in an electrically conductive nozzle associated with means shaped to deliver injected fuel as a coniform layer directed along the longest possible path before intersecting a surface of the combustion chamber, and said device further comprising means for effecting spark ignition of said fuel substantially at the location of its injection into said chamber.

### BRIEF DESCRIPTION OF THE DRAWINGS

Figure 1 is a schematic illustration showing thermodynamic processes of the invention
Figure 2 is a longitudinal sectional view of a device constructed in accordance with the principles of the present invention for directly injecting and igniting fuel in the combustion chamber of an engine
Figure 3 is an end view of the device of Figure 2 showing the location of ignition electrodes.
Figure 4 is a schematic circuit diagram of the invention showing a sectional view of a representative combustion chamber, a cooling system, an exhaust system, fuel storage, fuel pressurization, a cooling system, waste heat recovery exchangers, an exhaust heat recovery exchanger, and delivery of engine-fuel to the combustion chamber.
Figure 5 is a perspective view of apparatus for recovering exhaust heat to be used to drive endothermic reactions between fuel and an oxygen donor.
Figure 6 is a schematic view of details of a preferred heat exchanger tube-fin fabrication technique utilized.
Figure 7 is a schematic view of one embodiment of an apparatus for recovering energy and waste water from the exhaust stream of an internal combustion engine constructed in accordance with the principles of the present invention.
Figure 8 shows a schematic view of another embodiment of an apparatus for recovering energy and waste water from the exhaust stream of an internal combustion engine.
Figure 9 shows a longitudinal sectional view of a device constructed in accordance with the principles of the present invention for instrumenting engine processes including injecting and igniting fuel in the combustion chamber of a combustion engine.
Figure 10 shows a schematic view of a combustion engine along with control systems for power production, energy recovery, power assisting, and related operations for producing hydrogen by electrolyzing water and other hydrogenous feedstocks using any of a variety of electrical sources and using the hydrogen as a stratified-charge fuel.

### DESCRIPTION OF THE PREFERRED EMBODIMENTS:

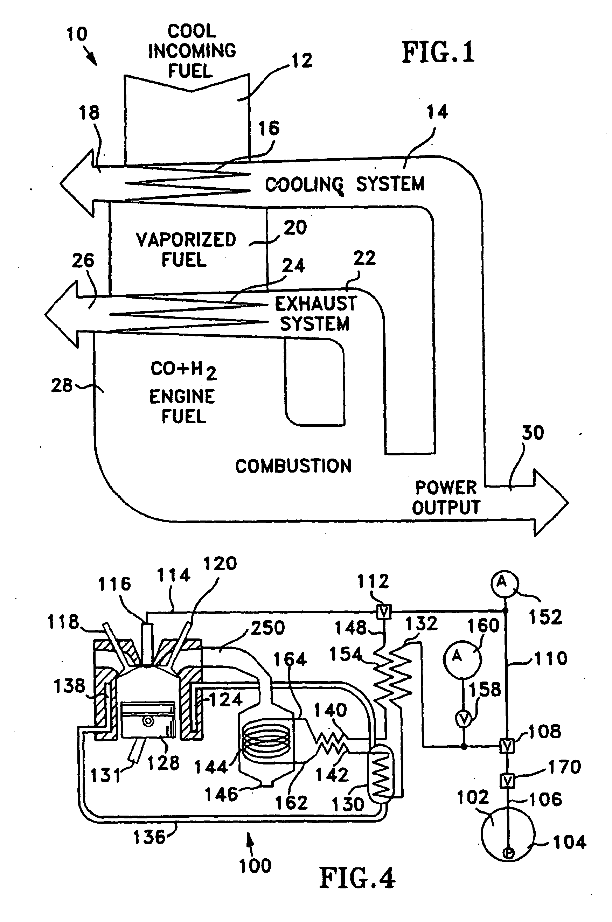

Waste heat (normally rejected through the cooling, exhaust, and braking systems) is used to supply endothermic heat energy required to drive reactions between a primary fuel and oxygen-donor feed stocks such as air, water or alcohols to produce a preferred fuel called "engine-fuel". This enables 20% to 40% greater heat input to the engine upon combustion of the engine-fuel (and, therefore, 20% to 40% greater vehicle range) than could be delivered by conventional engines directly burning the same amounts of natural gas, gasoline, or fuel alcohol feedstocks. This process is illustrated in Figures 1,4,7,8, and 10. In Figure 1, heat transfer 10 is schematically depicted as energy vectors crossing each other. The width of each energy vector (arrow) generally depicts the magnitude of energy that is represented as heat, mechanical or chemical potential energy. The chemical potential energy of incoming fuel and any other chemical feed stock to be used in the engine is shown as arrow 12. Cooling system heat is shown as arrow 14 which is reduced in magnitude as shown by arrow 18 as a result of heat transfer to incoming fuel at 16. Heated incoming fuel is increased in energy by the heat transfer as shown by arrow 20. Heat from exhaust gases is transferred to fuel 20 at 24 as shown to reduce the energy of the exhaust gases from 22 to 26 and increase the energy of the fuel to 28 by temperature increases and creation of hydrogen and carbon monoxide as shown in Tables 1 and 2. The engine-fuel 28 is burned in the engine to produce motive power 30 and supplies of waste heat 14 and 22.

Representative temperatures of the processes shown in Figure 1 are 21 deg. C (70 deg. F) at 12; 93 deg. C (200 deg. F) at 20; 260 deg. C (500 deg. F) at 28; 409 deg. C (800 deg. F) at 22; 107 deg. C (225 deg. F) at 26; 115 deg. C (240 deg. F) at 14; 38 deg. F (100 deg. F) at 18. These temperatures vary depending upon the compression ratio of and mode of operation of the engine involved in the application.

It it preferred to provide heat exchange between hot engine-fuel at 28 and preheated fuel 20 in instances that large engines using appreciable amounts of fuel are involved. Depending upon the degree of heat-transfer desired, this reduces the temperature of engine-fuel to something approaching the temperature of the engine cooling system and enables a much lower cost construction for the fuel delivery components because thermal degradation factors are reduced.

High flame speeds, wide combustible limits, high thermal efficiencies, elimination of particulates, extremely low carbon monoxide and no unburned hydrocarbons characterize engine-fuel combustion results from arrangements described herein with the invention.

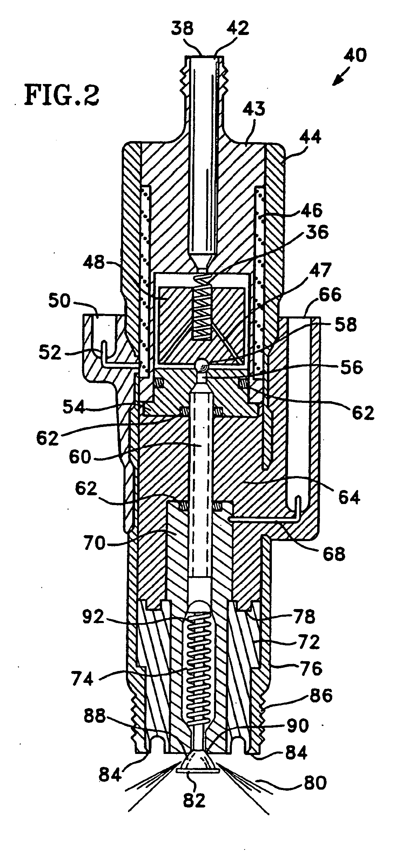

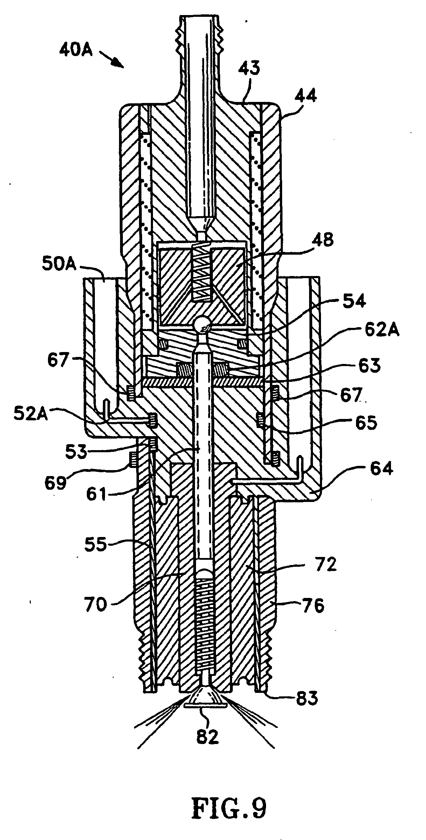

These basic advantages are preferably facilitated by the use of a combination fuel-injection and spark-ignition device 40 as shown in Figures 2 and 9 to introduce the engine-fuel directly into the combustion chambers of internal combustion engines. Embodiment 40 is provided with the same thread and reach 86 as spark plugs for the engine served by the invention. In instances that the invention is applied to Diesel engines, the design at 86 duplicates the configuration of the conventional fuel injector in the zone that provides a seal to the combustion chamber.

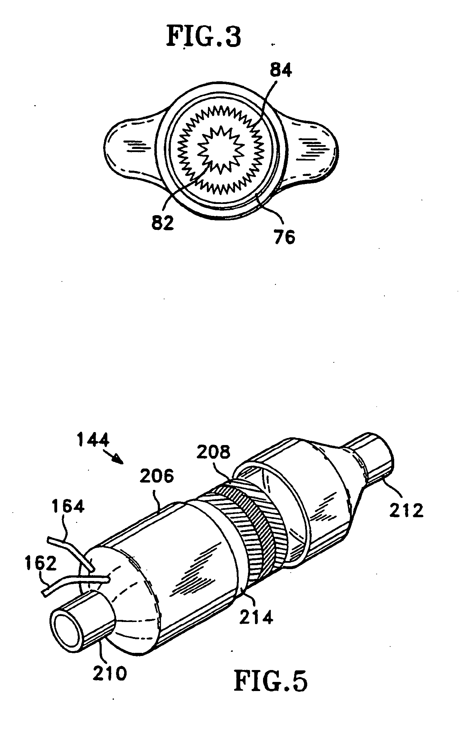

As shown in Figure 2, pressurized engine-fuel enters embodiment 40 at 38 through filter well 42 and is prevented from entering the combustion chamber as fuel spray 80 until just before pressure increases are needed for the power cycle in the combustion chamber. At the proper time, fuel is allowed to pass solenoid poppet 48 which is actuated against compression spring 36 by an electromagnetic force resulting from the flow of direct electrical current in winding 46. Poppet 48 is preferably moved against the direction of incoming fuel flowing through holes 47 as shown. Voltage to drive current through coil 46 is supplied by connection 52. Coil 46 may be grounded to conductive body 43 or returned by suitable connection (not shown) such as 52. High voltage for ignition is delivered by a suitable spark plug wire and terminal 68 in high voltage well 66. Connection 68 delivers the high voltage to conductive nozzle assembly 70. High voltage is carried by compression spring 74 to wire bar 92 to points 82. Spark plasma is developed across the gap between 82 and 84 as fuel 80 is sprayed into air in the gap shown for fuel ignition. Figure 3 shows the end view of the gap and spark points 82 and 84.

Fuel flows past metering body 54 to dielectric tube 60 when poppet 48, along with suitable seal 58 is lifted from orifice seal 56. Seal 58 may be a polished ball made from a carbide such as tungsten carbide or ceramic such as sapphire for extremely long life applications or a fluoropolymer elastomer for applications in smaller engines such as lawn mowers. Tube 60 may be scaled by any suitable means including O-rings 62 to prevent leakage of the engine-fuel. Feature 78 seals dielectric 64 to insulator 72. Fuel is delivered from tube 60 to electrically conductive nozzle 70. Compression spring 74 acts against headed wire bar 92 that is attached to check valve poppet assembly 88 to keep 88 closed except when fuel flows past the temporary orifice between 88 and 90.

Check valve poppet assembly 88 is normally at rest against seat 90 of nozzle 70. Moveable element 88 may be formed in any suitable shape as may seat 90 to produce the desired spray pattern 80 for the particular combustion chamber that the invention serves. It is the object of spray pattern 80 to produce a great degree of air utilization in combustion reactions while minimizing oxides of nitrogen, unburned hydrocarbons, carbon monoxide, and heat losses from combustion products after ignition.

In application on smaller engines, it is often most suitable to provide a large included angle for a concave conical seat 90 for use with a convex conical poppet 88 of slightly smaller included angle. This cone within a cone or "cone-cone" check poppet and seat arrangement results in considerably larger surface to volume ratios for fuel entering the combustion chamber than from any number of orifices which are typical to prior art injectors. Fuel entering the combustion chamber is squeezed into a thin coniform layer by the action of spring 74 and dynamic forces of air compression against the air-side of poppet 88. Fuel combustion is extremely fast because of the large surface to volume spray that is presented.

The angle chosen for concave conical seat 90 is usually optimized for the purpose of directing the conical fuel spray elements along the longest possible path before intersecting a surface of the combustion chamber. Ignition occurs at the beginning of fuel entry into the combustion chamber and continues throughout the time of fuel flow into the combustion chamber. This provides the greatest air utilization and the longest burning time for controlled-temperature fuel combustion before approaching a quench zone of the combustion chamber. This embodiment provides an included angle of entry and variable gap between 88 and 90 as a function of fuel pressure and viscosity. At maximum torque production, high-speed conditions the amount of fuel delivery is much larger and occurs during a greater number of degrees of crank-shaft rotation. This embodiment provides optimized air utilization for different flame speeds by providing an included angle for the fuel cone that aims the entering rays of injected fuel

For optimizing the fuel pattern for hydrogen or engine-fuels produced by reactions such as those in Table 3, the included angle is large and the fuel is aimed at the piston rim at near top dead center. For slower burning natural gas or petrol fuels the included angle is smaller and the fuel is aimed at a piston-rim location somewhat after top dead center. The opportunity is provided to optimize power production for start-up conditions in which a conventional fuel such as natural gas, gasoline or Diesel fuel is burned and then after production of engine-fuel to have extremely advantageous operation including production of more power and better economy than with conventional fuel injectors. It is preferred to form poppet 88 from sheet or tube material and to provide highly angular points on the lower skirt as shown for the purpose of reducing the discharge voltage and temperature during plasma generation. It a preferred to form electrode skirt 84 with highly angular points, as shown, for the same purpose. Alternate geometries of poppet 88 and the form for seat 90 that are particularly suitable to combustion chambers of larger displacement engines is a spherical form in which the spherical surface of 82 contacts a concavospherical seat 90 of somewhat larger radius. This sphere within a sphere or "sphere-sphere" check poppet and seat arrangement results in a fuel spray cone 80 that tends to provide increased surface to volume and greater air utilization than the cone-cone arrangement described previously. In light-weight engines with high piston speeds, such as racing engines, it is preferred to maximize the flame speed by forcing production of an even greater degree of fuel surface to volume ratio by providing a convex-spherical seat 90 on which a convex-spherical surface of 82.

In order to achieve satisfactory fuel penetration into the compressed air mass of larger combustion chambers it is advantageous to provide channels (not detailed) in the surface of 82 or in the surface of seat 90. These channels carry greater fuel flow than the areas between the channels and provide greater fuel penetration than from areas between the channels. Helical and other patterns of channels that provide acceleration of the fuel at angles with the shortest distance of travel from the orifice in nozzle 70 to the combustion chamber, cause rotation of component 82 which is advantageous in polishing seat 90 to keep it clean and uniform.

These various cone-cone, sphere-sphere, sphere-cone, cone-sphere, and channel geometries provide important improvements over the prior art. Prior-art Diesel fuel injectors and the injectors anticipated by U.S. Patents 1,401,612; 3,173,409, 3,830,204; 3,094,974; 3,316,650 and 4,967,708 utilize sprays of fuel from one or more individual holes to spray fuel into air masses within the combustion chamber, mix with this air and then travel into a spark gap at a critical time that the mixture is spark ignitable. Embodiments of the present invention deliver fuel in a conical form having much higher surface to volume ratio and does so in a pattern that assures completion of combustion events before the fuel reaches quench zones within the combustion chamber. These various embodiments answer the need to optimize air utilization requirements in virtually any combustion chamber design without resorting to efficiency.

My invention is applicable to large engines having combustion chamber diameters of 12" or more and to small combustion chambers of the size that is suitable for model airplane use. It is preferred to use ignition devices that are tapered to a point or whiskers that are pointed to decrease the spark discharge voltage requirements on start-up and in some engines to remain at sufficiently elevated temperatures between fuel introduction periods to assure hot-surface ignition without additional spark discharge. Whisker dimensions suitable for the ignition process include 0.13 mm (0.005 inch) to 2.29 mm (0.090 inch) diameter and lengths from 0.51 to 6.35 mm (0.020 to 0.250 inches) depending upon the configuration of the combustion chamber of the engine being served. Suitable materials for tips 82 and 84 include ferrous alloys such as 5 to 6% aluminum, 20 to 25% chromium, balance iron; silicon carbide; molybdenum silicon compounds; cobalt super-alloys and nickel super-alloys.

In many applications it is desired to reduce spark energy, minimize the use of spark ignition, or to provide ignition without the aid of spark generation equipment. Reasons include avoidance of: spark-sourced oxides of nitrogen, radio interference, and spark erosion of ignition components. This is accomplished by the use of catalytic coatings on the surfaces of 88, 90, 82 or 84. Suitable catalysts include platinum black, nickel black, platinum, palladium, osmium, iridium, nickel, nickel oxide, and intermetallics of transition metals such as vanadium-copper-zinc. It is advantageous to generate hydrogen as provided in Equations 1-14 for purposes of increasing the thermal efficiency and for cleanly starting the engine on engine-fuel or torching other fuel-air mixtures without spark or with greatly reduced spark energy. Engine-fuel is particularly conducive to reducing oxides of nitrogen because the energy requirement for spark ignition is only 0.02 mWs compared to 0.29 mWs for methane and 0.24 mWs for gasoline. Engine-fuel ignition requires less than 10% of the plasma energy needed for gasoline and other hydrocarbons. This greatly reduces oxides of nitrogen formation at the beginning of combustion and is followed by limitation of maximum combustion temperature by control of the rate of fuel addition and timing of injection and ignition events to optimize power production, fuel economy, engine smoothness, etc., while minimizing oxides of nitrogen.

For clean starting on conventional fuels, tips 82 and 84 may be coated with nickel oxide, cobalt oxide, vanadium oxide or similarly effective materials to catalyze combustion of hydrocarbons by increasing the rate of carbon monoxide formation in oxygen-deficient zones within an overall oxygen-rich reaction. By catalyzing early formation of carbon monoxide in the zone around tips 82 and 84, Carbon dioxide. Smoke particle formation is virtually eliminated.

In instances where the engine must start and develop emergency power without failure or hesitation, it is preferred to start with spark plasma in the gap between 82 and 84 and to run with application of the plasma ignition until satisfactory power development is indicated. This assures rapid starting and heating of 82 and 84 to ignition temperatures. Applications such as emergency power for hospitals, computers, and chemical processes are examples of such assured applications of the invention. In less critical applications It it preferred to plate points 82 and 84 with coatings such as nickel or platinum-group alloys. In more requiring applications it is preferred to manufacture 82 and 84 from such materials for long-life spatit-ignition and for causing catalytic along with hot-surface ignition. Combinations of spark, catalytic and hot-surface ignition provided by these embodiments make the invention suitable for engines of every size, piston speed and application. Depending upon the "cone-sphere" design selected, ignition occurs by fuel air contact with catalytic or hot surface effects on 82 and 84 or due to passage of low-temperature apark-plasma energy through the alternate layers of air, excess-air-fuel zones, fuel-rich zones, excess-air-fuel zones, and air. The greatest flame speed occurs in the surfaces of the fuel-rich zones. Even at the highest piston speeds this creates a fuel-rich, higher-speed combustion-process driver within excess air zones that assures completion of combustion events in slower combustion rate areas.

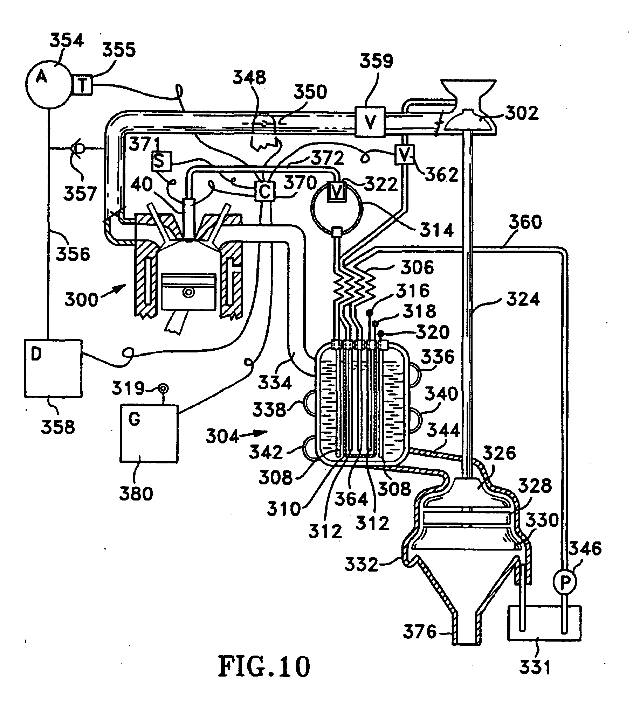

It is preferred to use a spark generator 371 of Figure 10 that reverses polarity with every spark to reduce spark erosion on 82 and to eliminate high-voltage electrolysis of insulator 64. Spark voltage generator 371 may be of any suitable design for delivering alternating spark current to the gap between 82 and 83 or 84 as shown. This greatly improves ignition efficiency and the life of spark-injector 40.

Prior art devices depend upon swirl of the air in the combustion chamber to deflect fuel sprays into helical paths in order to prevent penetration to quench zones. Creating swirl of air In the combustion chamber is produced by impedance to air entry. This reduces the mechanical efficiency of the engine by incurring reduced pressure over the piston compared to the pressure under the piston. More mechanical work must be done to overcome the manifold-vacuum condition than if there was no impedance to the air entry. Prior-art approaches depend upon variable air throttling in all practical modes of operation to produce homogeneous mixtures of fuel and air at all levels of power production. In order to be spark ignitable the air had to be throttled so the fuel could be reduced from highest power ratings to lowest power ratings. This type of operation greatly reduces part-load efficiency by increasing the pressure difference through which the piston must operate during intake conditions.

Multiple sparks are provided when necessary in combustion chambers with varying turbulence and to assure ignition regardless of fuel selections with widely varying viscosity, density, and beat-release characteristics.

Unimpeded air entry is allowed into the combustion chambers at all power levels for maximum mechanical and volumetric efficiencies. This provides more power, smoother operation without "dead spots", and a greater range of acceptable speed-torque conditions, It is preferred to operate at overall fuel-air ratios ranging from far-excess air at low-power settings to excess-air at higher-power settings. Table 2 shows the limits of flammability, flame speed, and heat of combustion of various fuels including engine-fuel. As shown, hydrogen which characterizes engine-fuel combustion provides more than 7.5 times higher a flame speed than more inert fuel selections. This enables much later injection and ignition of engine-fuel than conventional hydrocarbon fuels and results in greatly improved brake mean effective pressure per BTU of fuel value by not incurring back work during slow-burning pressure rise in the compression cycle of the engine operation.

Engine-fuel combustion is characterized as an extremely-fast colorless combustion process and the degree of heat loss by radiation to combustion-chamber surfaces is much less in comparisons to conventional fuels. Embodiments of the present invention facilitates injecting and igniting engine-fuel just after top dead center (TDC) to provide much quieter operation because piston knock and vibration due to untimely ignition during the compression cycle are eliminated by embodiments of the invention. Converted engines runs cooler, smoother, quieter and more efficiently than with conventional fuel conditioning and delivery systems.

Figure 4 shows the method of the invention in a schematic circuit of thermochemical operations. Heat engine 100 which may be any heat engine such as a gas turbine; rotary-combustion; external-combustion Stirling-type engines including Ericsson and Schmidt; or an internal-combustion engine as depicted with any suitable expander such as piston 128 and rod assembly 131 as shown along with intake valve 118 and exhaust valve 120. Fuel is stored at 102. The fuel may be any suitable selection such as compressed natural gas, a suitable fuel alcohol, liquid natural gas, ammonia, gasoline, or Diesel fuel. Liquid fuels stored at ambient pressure are preferably pressurized by pump 104 to required fuel injection pressure which ranges depending upon fuel viscosity, surface tension, molecular weight, and carbon to hydrogen mass ratio, from about 100 to 1,500 psi above the compression pressure of the engine.

At start-up conditions with positive-displacement engines, cold fuel is delivered to three-way valve 108 and directed to the engine through flue 110, three-way valve 112, line 114, and fuel injector 116. Fuel is sprayed into and ignited within all combustion chambers that are about 1% to 70% into power (expansion) cycles. Rapid heating of the air and power delivery results. The engine is started without a starter motor or started much more rapidly if a starter motor is utilized to assure development of oil pressure. After the engine is started, injection and ignition timing are advanced to provide optimum conditions.

It is preferred to use an electric pump in conjunction with the engines mechanical pump for pressurization of liquid fuels. In instances that the bearing designs require pressurization of oil to the crank and cam shaft bearings before start-up, it is preferred to provide a safety interlock to prevent fuel injection until oil pressurization by a suitable hand or electric pump has been accomplished.

Direct-injection with spark-ignition starting is an important improvement over prior-art methods of starting an engine. it results in much reduced package weight, initial cost savings, and elimination of starter-system maintenance expense. This quick starting system allows the engine to be stopped at stop signs and instantly restarted to power the vehicle when needed. This eliminates waste of fuel and production of pollutants at conditions when power is not needed. It is preferred to use a conventional electronic microprocessor with memory for monitoring, starting, and optimizing the engine. Piston locations within combustion chambers are stored at shut down and recalled for the start-up routine. A suitable microprocessor 370 of Figure 10 facilitates safe operation by instantaneous monitoring of oil pressure, temperature, vibration, and other vital instrumentation to provide emergency shut-down if the engine has no lubricating oil or if other malfunctions occur.

Compressed gas fuels stored in 102 are pressure reduced from the storage pressure and regulated at the desired pressure of delivery. Fuel injection through 116 is preferably at substantially top dead center conditions until the storage tank 102 is nearly depleted and fuel pressure is reduced below the desired delivery pressure. Embodiments of the invention provides the steps of injecting the fuel substantially at top dead center conditions of the combustion chambers until the storage pressure is reduced due to depletion of the storage inventory and then injecting the fuel progressively earlier in the compression period and then progressively into the intake condition of the combustion chambers to facilitate greater range from the fuel storage system by providing an optimized way to utilize the last portions of stored fuel. After injecting fuel and monitoring combustion chamber conditions as indicated by instrumentation 62A, 63, or 65 in spark-injector 40A of Figure 9, timing of fuel injection and ignition are optimized for the subsequent injection and ignition events according to the fuel storage pressure available. As the fuel storage pressure is depleted, the timing of injection progresses from near top dead center towards bottom dead center and finally into the intake period of the engine.

After the engine has warmed up and the temperature at thermochemical converter 144 has reached about 260 deg.C (500 deg. F), valve 108 shuttles to direct fuel to heat exchanger circuit 154/132 as shown. The engine continues to operate on fuel supplied by accumulator 152. Fuel and any other desired oxygen donor (such as air or the combinations listed n Tables and) from tank 160 is pressurized pressurized by suitable pump 158 and heated in heat exchanger 130 by cooling fluid delivered from cooling jacket 124 and returned to cooling jacket 138 through conduit 136 as shown. Combinations of fuel from tank 102 and water or another oxygen donor from tank 160 are called "reactants". Further heating of the reactants is accomplished by counter-current exchange between 140 and 142 with engine gas produced in thermochemical converter 144.

Final heating of the reactants and production of engine gas results from catalytic processes in converter 144. Hot exhaust gases 250 ranging in temperature from over 593 to 316 deg. C (1100 deg. F to 600 deg. F) depending upon the duty cycle are delivered to thermochemical converter 144 as shown. Cooled exhaust gases pass through exhaust conduit 146. Cooled jacket fluid is returned to the engine through conduit 136 for circulation through suitable cooling passages 138 and 124. Another heat rejecting circuit comprising an ordinary radiator and thermostatic valve may be used in series or in parallel with the circuit of 130 and 136.

Engine-gas is delivered to three-way valve 112 and directed to the engine through line 114 and fuel injector 116. It is preferred to use the combination fuel-injector and spark-ignitor 40 shown in Figures 2 and 3.

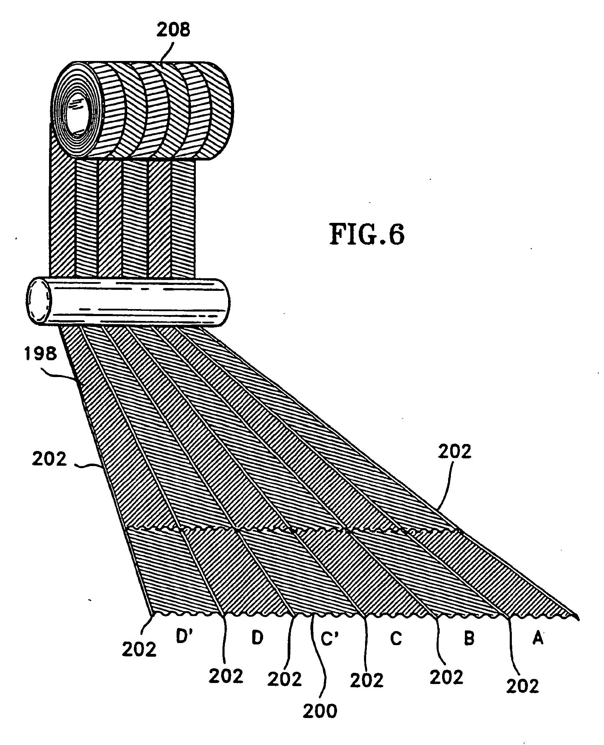

Details of the preferred embodiment for thermochemical converter 144 are shown in Figures 5 and 6. Recovery of waste heat from the engine is provided by passing hot exhaust gases into inlet 210 of canister 206. Heat exchange from hot exhaust gases heats the feed stocks delivered through tube 162. Thermochemically converted engine-fuel leaves reactor 144 through tube 164 and is preferably cooled by regenerative heat exchange to feed stock fluids in heat exchangers 140/142 and 132/154 as shown in Figure 4.

Heat exchange and catalytic conversion of feed stock fluids within 206 are provided by flat tube coil 208. Tube coil 208 is preferably made from two strips of metal that are formed to provide extremely high surface areas for heat transfer and catalytic actions upon mixtures or solutions of feed stock fluids. One such embodiment 200 for the strip stock is shown in Figure 6. Strip 200 is formed to have corrugated, knurled, herringbone, or otherwise circuitous surfaces as shown. It is continuously bonded to sheet 198 along seams 202 as shown. Sheet 198 may be formed like 200 or provided as an essentially smooth sheet. A particularly high surface to volume catalytic heat exchanger is formed from sheets 198 and 200 in which each sheet is corrugated to form adjacent herringbone designs in the areas between seams 202 when assembled as shown. The herringbone corrugations of each sheet are opposite the other sheet. This provides parallel internal tube-ways between seams 202 that have circuitous internal channels to force turbulent flow of reactants at all portions of fluid progress through the reactor and turbulent now of exhaust gases through the corrugated spaces that are provided between formed or rolled layers of the assembly.

Tube ways are manifolded to provide the desired circuits through reactor 144. It is preferred to have counter-current heat exchanges in which the coolest fluid entering the reactor receives heat from the coolest exhaust gases as shown. Fluid nearing the exit of the reactor receive heat from the honest exhaust gases. After manifolding the tube-ways, the assembly is spiral wound on a tube and the assembly is encased in insulated canister 206. The spiral-wound assembly is shown in Figure 5.

Heat additions through catalytic surfaces are preferred to perform the desired reactions of Equations 1-11. The embodiment shown in Figures 5 and 6 provides high thermal conductivity with catalytic functions. Sheet materials for reactor 208 may be typical to those listed In Table 4. As shown, a wide variety of alloys and surface coatings for iron, aluminum, and copper based sheet structures are possible. The catalyst selections may have further roles of serving as bonding or scaling agents in the catalytic heat exchangers. After forming, seam welding, manifolding, and coiling, the assembly may be furnace or induction brazed to bond contact areas inside the flat tubes and between layers of flat tubes. This greatly strengthens the assembly.

Sheet strip selections are first plated or hot-dip coated to uniform coating thicknesses by any suitable production line technique and then roll-bonded or seam.welded along the seam zones 202. It is preferred to bond all areas of contact between sheet 198 and 200 to arrest pressure stresses from the fluids within the flat tubes. It is also anticipated that diffusion gradients of desired catalytic agents would be produced by multiple platings or coatings followed by heat treatment.

Although zinc and copper have been recorded in prior art efforts to dehydrogenate alcohols, it is important to note that the present invention may use catalytic alloys of zinc and copper or coatings containing zinc and copper in solid solution to provide heterogeneous dehydrogenation of alcohols, organic solutes, and water more or less simultaneously. A series of intermediate reactions are believed to be responsible for the overall reactions as shown in Equations 1-11. A particularly useful aid to the understanding of intermediate reactions is found on pages 535 through 586 of the Second Edition of the Kirk-Othmer "Encyclopedia of Chemical Technology".

As noted in Table 4, the listed alloy sheet catalysts have considerable ductilities and allow cold working to form turbulence-inducing patterns, such as corrugations or crossed rows of embossments depending upon the hot endurance strength of the selected sheet system at the operating temperature chosen for the application. Sealing the lower sheet to the upper sheet is accomplished by metallurgical joining along 2.29 mm (0.090") wide seams 202 between 25.4 mm (1") wide channels 204. A suitable sheet-stock thickness for strips 198 and 200 of the embodiment of Figure 6 is 0.25 mm (0.010") with a corrugated channel depth of 038 to 1.52 mm (0.015" to 0.060"). This gives a very low clearance volume within the assembled reactor coil.

The inventory of engine-fuel is minimized by the low clearance volume in all parts of the fuel conditioning system. To further assure safety, pressure is monitored in lines 106, 110, 148, and 114. If the rate of pressure change exceeds a narrow preset value, pump 104 is stopped and valve 170 is closed to prevent entry of additional fuel to the fuel-conditioning system. Because heat exchangers 130 and 144 are housed in water cooling or exhaust systems, additional fail-safe virtues are provided. If a leak in heat exchanger 130 or 144 would occur pump 104 would shut down, normally-closed solenoid valve 170 would close, and the small inventory of escaping fuel would be contained in water or in the exhaust pipe where it could do no harm. Fuel pressures of 680 atm, at 538 deg. C (10,000 psi at 1,000 deg. F) are practical with catalyst sheets having yield strengths of 20,000 psi or more because of the tightly coiled and bonded spiral assembly. An additional aid in arrestment of stress is by transfer of compressive preload from the outer containment by tubular structure 206 as shown in Figure 5 which is preferably constructed from several wraps of thin strip stock to reduce heat losses and provide high strength.

It is preferred to thermally isolate coil 208 from canister 206 by refractory fiber sleeve 214. This provides an air cooled containment cylinder 206 in which tensile loading occurs to produce compressive loading of coil 208. Use of the insulator sleeve provides a space for 12 mm OD, 2.4 mm wall (1/2" OD, 0.095" wall) manifold tubing of stainless steel tubing which is also used to convey engine gas to heat exchanger section 130 and to fuel injectors 116. In applications where additional safety considerations are warranted it is preferred to clad tubing 106, 110, 148, and 114 with a sheath of high-strength stainless steel such as 17-7 PH. Inlet manifolding and a core for the spiral assembly is provided by joining the coil to a 76 mm dia., 4.75 wall (3" diameter, 0.187" wall) tube that is internally partitioned to provide desired series flow of vapors through A and B then parallel flow through C and C' followed by parallel flow through D and D' as shown in Figure 6. Exhaust gases pass into the reactor from connections 210 to 212 to provide a modified counter-current heat-exchanger, endothermic-reactor combination.

Engine cooling jacket water at 82 to 121 deg. C (180 deg. to 250 deg. F) may be circulated in an additional section of heat exchanger 130 to provide standardization of the engine gas temperature. In this instance, the cooling jacket water would be circulated from 124 to 138 through heat exchanger 130 as shown in counter-current arrangement to flow of engine gas. An alternate arrangement for providing desired heat exchanges is to build heat exchangers 130 and 132/154 in one assembly with thermostatically-controlled engine-jacket water circulation from inlet 124 to 138. In emerging engines with materials that allow combustion-chamber wall temperatures of 260 deg. C (500 deg. F) and higher, it is preferred to provide standardization of the engine-fuel temperature with split-phase heat-pipe heat exchangers. Final heat sinking to the vehicle frame, cogeneration heat requirements for air conditioning, and further preheating of feedstock supplies of wet-fuel alcohols are contemplated.

Pressurized engine-fuel from 104 or a suitable regulator is controlled by solenoid-operated, three-way valves 108 and 112. Engine-fuel in heat exchanger section 154 is monitored for temperature and pressure conditions. Valve 112 is operated "OPEN" to allow flow from heat exchanger section 154 to fuel injector 116 if the temperature and pressure are within preset limits. Valve 112 is "CLOSED" to flow from 154 but "OPEN" to flow from pump 104 and provides assured engine start-up and operation with injection of liquid fuel until desired temperatures and pressures are developed in section 154. During operation with liquid fuel, map "A" of the fuel management system is used. During operation with gaseous engine-fuel map "B" is used. Operation between maps A and B is electronically switched in correspondence to the operation of solenoid valve 112.

Fuel entering the combustion chamber is ignited by sparks that pass through alternate layers of air-fuel-air and ignition is assured regardless of the overall combustion chamber inventory of air and fuel. Overall air to fuel ratios of 1,000 to 1 are as assuredly ignited by the invention as are air to fuel ratios of 15 to 1. Embodiments of he invention provide best fuel economy and minimum emissions during cold-engine conditions with direct-injection and spark-ignition of liquid fuels. Later, after reaching the engine's designated operating temperature, embodiments of the invention provides useful recovery of engine waste heat by operating on gaseous fuels that produce considerably more energy upon combustion than the feedstock liquid fuels. Embodiments of the invention facilitate these fuel efficiency advantages without sacrificing specific power ratings of the engine in power-per-thermal-unit comparisons. This is an extremely important aspect of the invention because it is generally necessary to specify 30% to 150% larger displacements and increased compression ratios (than for carbureted gasoline fuels) when use of gaseous fuel is contemplated. The larger engine requirement cascades into application penalties including:
1. Larger tires, shock absorbers, springs, starter motors, batteries, alternators, power assist units, transmissions, and brakes for a greater curb weight in transportation applications.
2. Greater requirements for iron, chromium, molybdenum, vanadium, manganese, nickel, and petroleum reserves. More energy is required to mine, mill, refine, alloy, cast, forge, machine, and build the larger engines. The greater demands upon finite reserves of critical materials produce higher prices per pound and force inflation in the world's economy.

In addition, embodiments of the invention overcome the difficult problems of back-firing and hesitation, wherein hydrogen is inopportunely burned within the intake manifold of carbureted or manifold injected engines. This problem stems from the fact that hydrogen will support combustion in remarkably wide fuel-to-air ratios and because flame speeds in hydrogen combustion are extremely high. The invention prevents back-firing by eliminating any mixing of hydrogen and air until the fuel-injection event within the combustion chamber.

Production of engine-fuel from inexpensive fuel alcohols and compressed or liquid natural gas is facilitated. A longer-range regime would use bio-sourced methane and wet ethanol and methanol. The present invention thermochemically processes and utilizes feed stocks that are less refined and less expensive than gasoline or Diesel fuels including natural gas, crude alcohols, and ammonia liquors as shown in Tables 1-3. Considerable range and thermal efficiency improvements are offered with Diesel and gasoline fuels.

Fuels such at natural gas, coal gas, acetone, methanol, ethanol, propanol, propane, butane, ammonia, and butanol are attractive replacements for traditional petroleum fuels. The fuel alcohols and light paraffins are readily produced from coal, peal, oil shale, tar sands, natural gas, solid wastes, or freshly-grown biomass. Using sewage- and garbage-sourced hydrogen, methane, and fuel alcohols is facilitated and the invention allows petroleum to be used for making more valuable polymers and petrochemicals.

A well-recognized and long-standing problem concerning blo-fuels is the energy-intensive nature of producing fuel alcohols from coal or biomass. Water present in the coal or biomass feed stocks, along with steam used in reactions with carbonaceous feed stocks to gasify the feed stocks requires considerable energy to reach process reaction temperatures. After generation of mixtures of hydrogen and carbon monoxide (water-gas) and catalytic synthesis of fuel alcohols, considerable additional energy often is required to remove water condensates and produce anhydrous fuel.

Commercial production of methanol by the Oxyl process, the action of fermentation enzymes, or destructive distillation of lignin and cellulose could be considerably less energy-intensive if the product could be used "wet" (130- to 190-proof) rather than "dry" (200-proof). My process and apparatus facilitates the advantageous usage of natural gas, wet-fuel alcohols, water-soluble or alcohol-soluble organic compounds, and engine waste heat by the illustrative reactions shown in Tables 1 and 2 and as follows:
WET NATURAL GAS plus WASTE HEAT yields HYDROGEN and CARBON MONOXIDE

   CH₄ H₂O+HEAT yields 3H₂ +CO Eqn. 15

The reactants in Equations 1-8 of Table 3, consisting of one or more alcohols, one or more soluble organics, and water, are heated by exchange with exhaust gases to temperatures ranging from 107 to 538 deg. C or 225 to 1,000 deg. F. Hot organic-compound vapors and steam mixtures are passed through a catalyst to produce mixtures of carbon monoxide and hydrogen. Equation 9 illustrates how natural gas or biomass methane is reacted with steam to produce hydrogen and carbon monoxide. Equations 10 and 11 typify the reaction of gasoline and Diesel blends with a liquid containing oxygen to produce carbon monoxide and hydrogen upon endothermic reaction. These reactant blends would also contain emulsifiers for long-term storage purposes. The vaporous product or engine-fuel is used in the combustion chamber as a stratified-charge fuel and is spark-ignited.

Heat-release potentials for complete burning of the engine-fuel constituents exceed the complete burning potentials of the fuel feed stocks by 20% to 40%. Increases in beat-release potentials are derived by exchange from engine waste heat to the endothermic reactions generally shown in Equations 1-14 of Table 3. Equally important is the opportunity to use wet fuels that are 30 to 50% less energy-intensive in initial production than are the anhydrous alcohols, phenol, or other organic-compound counterparts.

Another problem that the present invention overcomes concerns the ability to gain as much power per BTU or calorie of heat release from engine-fuel as gasoline produces in spark-ignited engines. It is generally conceded that gaseous-fueled engines require considerably larger engine displacements than gasoline-fueled engine per unit of power development. This is because previous attempts to use gaseous fuels have mixed the fuel with air during intake processes. Considerable breathing capacity and cycle energy have been diverted to introducing the gaseous fuels into the engine. In the present invention, the full breathing capacity of the engine is reserved for intake of excess volumes of combustion air. Brake mean effective pressures (BMEPs) are higher because: there are more molecules present in the combustion chamber to do expansive work; with more air present, more fuel can be combusted to release more energy; and the pistons are not required to do work (against crankcase atmospheres in comparison to manifold vacuum.

Water requirements not met by using wet alcohols or other combinations shown in Tables 2 and 3 may be supplied by condensation of water vapor from the exhaust gases of the heat engine employing the invention. Approximately one gallon of water is produced form each gallon of hydrogenous fuel burned by a heat engine. Illustratively, one mole of octane (or gasoline) thermochemically regenerated with eight moles of water burns in air to produce seventeen moles of water. Only eight moles out of the seventeen needs to be recycled:

C₈H₁₈ + 8 H₂O yields 8CO + 17H₂ ("ENGINE-FUEL") Eqn. 16

8CO+17H₂+ 12.5 O₂ yields 8 CO₂ + 17H₂O Eqn. 17

Similarly only one mole of water out of three needs to collected when methane is converted to engine-fuel.

CH₄ + H₂O yields CO + 3H₂ (ENGINE-FUEL) Eqn. 18

CO + 3H₂ + 2O₂ yields CO₂ + 3H₂O Eqn. 19

Condensation ultimately produces liquid water from heat-engine exhaust streams. The familiar plume of condensed water droplets that form in automobile exhaust streams during cold weather is an example of prompt condensation. Rain from clouds and fog are examples of more delayed condensations in which automobile exhaust contributions are added to water evaporated from oceans, lakes, and rivers and to water transpired by vegetation.

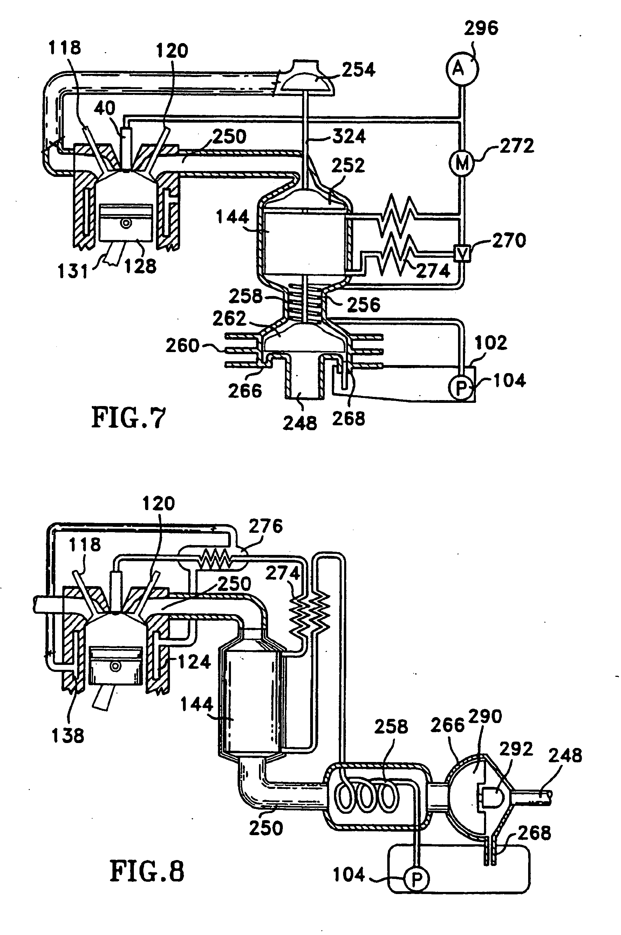

In order for approximately half of the water in an engine's exhaust to be recaptured for thermochemical regeneration, most of the exhaust stream must be cooled to approximately 93 deg C. (200 deg. F). Assuming daytime high ambient temperatures of 49 deg C. (120 deg. F), (and most places would have a lower daytime high temperature), there would be about an 27 deg C (80 deg. F) gradient for heat exchange to the atmosphere. Heat exchanges shown in Figures 7 and 8 provide extremely high surface area and turbulence in the heat exchange process to accomplish desired recovery of liquid water by condensation.

As shown in Figure 6, flat-tube heat exchanger components used in 144 and 256 are self-reinforcing and extremely conservative in the use of corrosion-resistant materials. These designs have been proven capable of extremely rapid fabrication rates. The design regime of Figure 6 is suitable, therefore, for the high-volume production requirements for automotive applications.

Collection of water from the exhaust stream is preferably accomplished by the process illustrated in Figure 7. Exhaust gases 250 from combustion chambers of an internal combustion engine are first used to drive a suitable air motor 252 which in turn drives a suitable compressor 254 to increase the amount of air entering the combustion chambers of the engine. Exhaust gases leaving air motor 252 enter heat exchanger 144 for the endothermic production of engine-fuel. Exhaust gases pass from heat exchanger 144 to beat exchanger 256 for heat rejection to engine-fuel reactants in fin-tube helical coil 258 and to the atmosphere from heat rejection fins 260. A second air motor 262, which is mechanically coupled to air motor 252 and compressor 254 by the connecting shaft as shown, extracts additional work from the expanding exhaust gases and centrifugally accelerates condensed water to collection shroud 266 for delivery of water through tube 268 to tank 102.

As shown, engine-fuel reactants typical to those listed in Tables 1 and 2 are stored in tank 102. Pump 104 delivers reactants to fin-tube 258 of counter-current heat exchanger 256. Reactant fluid is then further heated in regenerative heat exchanger 274 as engine-fuel is cooled by exchange to incoming supplies of feed stocks traveling to enter the coolest region of thermochemical converter 144. Fuel injection and ignition of engine-fuel in the combustion chamber is preferably accomplished by embodiments 40 or 40 A as shown.

Hot exhaust 250 contains all of the water vapor produced by the combustion process. As heat is extracted the relative humidity reaches 100% and liquid water can be extracted by exducer turbine 262. Exducer turbine 262 is preferably made from materials such as carbon-tiber reinforced liquid-crystal polymers that are not corroded or eroded by condensing water droplets. Turbine 252 is preferably made from conventional iron-based superalloys that have traditionally been selected for resistance to oxidation and creep in such applications. Compressor 254 is preferably made from aluminum, magnesium or polymer compounds depending upon the size of the engine and required life of system components.

A panticularly advantageous aspect of embodiments of the present invention is the recovery of waste energy along with the gain in expansion gases compared to compression gases. For the greatest part of the compression cycle only air is present. At the time near top dead center when pressure increase is desired, engine-fuel is injected and combusted to produce far more hot expansion gases than would be present if conventional fuels were used as homogeneous charges or if conventional fuels were injected and burned as stratified charges. This is illustrated by comparison of the processes of the present invention using methane and using engine fuel derived from methane.

CH₄+2O₂ yields CO2 + 2H₂O Eqn. 20

(one mole of CH4 yields three moles of expansion products)

CO + 3H₂ + 2O₂ yields CO₂ + 3H₂O Eqn. 21

Embodiments of the present invention provide a cycle with more molecules of expansion products than compression molecules. This results in greater power ratings for the same engine and increases the thermal efficiency of the process.

It is anticipated that large stationary engine applications with more or less constant speed operation, will place thermochemical reactor 144 in front of power turbine 252 for the purpose of improving the overall thermal efficiency of the system. In mobil applications where it is desired to gain the highest power to weight ratio, It is anticipated that power turbine 252 would be placed in front of thermochemical converter 144 as shown in Figure 7. In instances that it is not desired to add recovered water to stored fuel feed stocks in tank 102, condensed water from 268 may be added to reservoir 160 as shown In Figure 4. When the rate of water collection exceeds the desired rate of storage (as is the case in cool weather) heat rejection from fin 260 is attenuated to reduce the rate of condensation to collector shroud 266.

In instances where it is desirable to reduce the thermal signal of heat engines, the invention provides exhaust gas temperatures approaching ambient temperature. This effect may be emphasized by sizing exducer turbine 262 for expansion of the exhaust gases to ambient pressure. This is particularly advantageous in gas turbine engine applications.

Creating carbon monoxide and hydrogen from water and hydrocarbon fuels by regenerative use of engine waste heat provides at least 20% more range and fuel economy. This process virtually eliminates carbon monoxide and unburned hydrocarbon emissions because combustion of engine-fuel is characterized by extremely fast hydrogen burning characteristics to force carbon monoxide to complete combustion processes with excess air to yield carbon dioxide. Improved process efficiencies of the converted engine include:
1. Engine-fuel produces about 20% more heat than burning the feed stock fuel.
2. The invention reduces combustion-radiation losses by converting high-radiation feed stock fuels to low-radiation engine fuels.
3. Engine-fuel burns about 7.5 times faster than feed stock fuels. This allows the invention to produce a pressure rise that is much faster and to occur substantially at or after top-dead-center conditions. Both mechanical efficiency and thermal efficiency are improved are improved
4. The invention burns engine-fuel in locally fuel-rich conditions within excess air to enhance high flame speed
5. The invention burns engine-fuel in locally fuel-rich conditions within excess air to reduce conductive losses.

Combustion of engine-fuel within excess insutating air assures completion of combustion processes and elimination of unburned hydrocarbons and carbon monoxide.7. Oxides of nitrogen are greatly reduced by rapid combustion of fuel-rich zones within excess air envelopes under controlled fuel entry rates and local air-fuel ratios that keep peak combustion temperatures below 4,000 deg. F. Controlling combustion to limit peak temperatures to about 4,000 deg. F prevents formation of nitrogen-oxygen compounds such as NO. Burning on an overall excess-air stratified-charge basis at temperature limited conditions virtually eliminates production of oxides of nitrogen.

It has been found that the invention provides substantial improvements in thermal efficiency and reductions in undesirable emissions even when only a fraction of the hydrocarbon fuel is converted into hydrogen and carbon monoxide. This is especially true in the instance of using alternate fuels such as methane, propane, butane, and fuel alcohols. Converting some of the hydrocarbon fuel to hydrogen greatly increases flame speed and completion of combustion processes in the combustion chamber. This provides designers with a great latitude in applying the invention to various engine sizes and applications. Heavy-work engines using large amounts of fuel such as railroad locomotives would be provided with sufficiently large thermochemical converters (144) to convert essentially all of the hydrocarbon fuel to carbon monoxide for maximum fuel economy. Smaller engines such as those used for lawn mowers and motorcycles might be expected to sacrifice some of the fuel economy potential (offered by total conversion of the hydrocarbon fuel to hydrogen and carbon monoxide) for needed reductions of unwanted emissions.

In instances that the primary fuel selection is satisfactorily vaporized at the temperature and heat input conditions of heat exchanger 256, it is preferred to modulate flow through 144 to maintain optimum operating conditions. Examples of fuels of this type are methanol, ethanol, butane, gasoline, propane, and methane. This is especially helpful in large engines applied in stop and go applications such as a city bus. Three-way valve 270 provides for start-up of the engine on fuel passing directly from heat exchanger 256 to spark-injector 40. Valve 270 preferably provides variable division of flow to heat exchanger 274 and the by-pass circuit to spark-injector 40 as shown. This is done by operating valve 40 as a variable on-time digital flow controller. Fluid is passed through valve 270 to heat exchanger 274 for a short period of time (t1) and then is passed through valve 270 for a short period of time (t2). The magnitude of t1 ranges from about 30 milliseconds to full time operation. The magnitude of t2 ranges from about 30 milliseconds to full time operation. The ratio of t1/t2 provides control of the ratio of engine-fuel to unconvened reagents. The ratio of t1/t2 may be adjusted in response to the temperature of thermochemical convener 144 or in response to other optimization algorithms.

It is generally desired to provide by-pass flow t2 of at least 4% in each 600 milliseconds of operation after achieving a minimum threshold temperature in 144 for the purpose of inducing turbulence in the channels of 144. After exceeding the minimum threshold temperature in converter 144 it is preferred to operate with full time flow of reagents through 144. Modulation of flow to 144 provides the ability to achieve greatest conversion of reagents to engine-fuel under all duty cycles of the engine.

Static mixer 272 assures that engine-fuel from 144 is evenly mixed with reagent vapors that are by-passed through valve 270. Accumulator 296 valve 270. Accumulator 296 provides pressure smoothing of fluids that are modulated by valve 270 and smoothing of pressure variations resulting from transient conditions as the engine is changed in operating conditions. In instances that it is not desired to use an exhaust-driven exducer motor, it is preferred to use an electric motor 292 to drive a water exducer 290 as shown in Figure 8. Hydrocarbon fuel is added at 266 and mixed with condensate water in 102. Pump 104 pressurizes liquid feed stock stored in 102 and delivers to heat exchanger fin-tube 258. Countercurreat heat exchanger 274 extracts to standardize engine-fuel temperature by exchange to temperature regulated engine coolant.

Ignition of the stratified fuel and burning in locally fuel rich conditions that are surrounded by excess air dramatically improves combustion rates over lean-burn homogeneous-charge conditions and reduces oxides of nitrogen. Flame characteristics are typical to transparent burning of hydrogen rather than gasoline or Diesel flame fronts. Radiation losses arc minimized. Conductive losses are minimized. Resulting thermal efficiencies exceed the gain provided by the endothermic conversion of feed stock fuel to engine-fuel. Compared to conventional operation, improved fuel economy and reduced emissions during cold-engine conditions with direct-injection and spark-ignition are achieved. Later, after reaching the engine's designated operating temperature, embodiments of the invention provides useful recovery of engine waste heat by operation on engine-fuel that produces considerably more energy upon combustion than the feed stock liquid fuels. Embodiments of the invention facilitates these fuel efficiency advantages without sacrificing specific power ratings of the engine in power-per-thermal-unit comparisons and is applicable to gas turbines, rotary-combustion, and piston engines of two- and four-stroke designs.

Replacement with a suitable polymer tube 61 such as tetrafluoroethylene or removal of the ceramic tube 60 shown in Figure 2 allows polymer dielectric 64 as shown in Figure 9 to transmit greater force from bore 61 as a result of pressure differences within the bore 61 and the ambient pressure outside of wall 76 of tube 44. The radial force transmitted to wall 76 by dielectric 64 is met by an equal and opposite force by elasticalty-strained surrounding tubular steel wall 76 to contain the assembly as shown.

Removal of the ceramic tube 60 also allows polymer dielectric 64 to transmit greater force to valve seat 54 as a result of pressure differences between the compression chamber beyond dielectric 72 and valve seat 54. By providing a force or "pressure" transducer 63 between valve seat 54 and dielectric polymer 64, fuel injection and other events of engine operation can be instrumented. This aspect of the invention is shown in Figure 9. Especially useful pressure transducers for this purpose are strain gages and piezoelectric including ceramics such as quartz and barium titanate, and polymers such as polyvinylidine fluoride (PVDF). O-ring 62A in valve seat 54 can be made of such material to perform both sealing and pressure transducer functions. Deformation of the material produces a voltage signal that can be monitored to determine fluid pressure within the passage way from valve seat 54 to nozzle 70. Axial force resulting from pressure variations in the combustion chamber is also indicated by piezoelectric o-rring 62A in valve seat 54.

Masking o-ring 62A and metallizing with conductive ink or by sputtering NiCu electrode patterns on the surface of the o-ring allows the voltage signal to be taken out of the assembly by a suitable electrical cable to an external controller. Electrode patterns can be designed to emphasize the signal for fuel pressure monitoring or to emphasize the signal for combustion chamber pressure monitoring or it can be designed to monitor both activities

For monitoring the fuel pressure signal it is preferred to provide a metallized electrode around the greatest or outside diameter of the o-ring and to provide another opposing electrode at the smallest or inside diameter. The piezoelectric force signal is taken from the outside electrode to a controller outside of the fuel injector 40. It is preferred to make valve seat 54 of a suitable dielectric material such as sintered alumina or other ceramic material however it has been possible to coat metal seats with powder-coated and sintered dielectrics such as perfluoroalkoxy polymer to produce a dielectric coating sufficient to electrically iisolate the pressure transducer signal.

In instances that emphasized monitoring of combustion chamber pressures is desired it is preferred to mask the o-ring for application of opposing electrodes on the areas that contact the face of dielectric 64 and the parallel face of the o-ring groove in valve seat 54. This arrangement emphasizes voltage production between the electrodes for axial forces due to combustion chamber pressures.

Another electrode pattern that has been found to be best for monitoring both fuel pressure and combustion chamber pressure is provided by applying the electrodes about half-way between the two locations described above. This provides substantial signal for fuel injection and combustion-chamber events.

Such piezoelectric material (PVDF) is also available in various thicknesses and dimensions from Pennwall Corporation, Valley Forge, PA 19482. It has been found that a PVDF disc 63 having the outside diametrical dimension of the bore of case 76 at the location of valve seat 54, an inside bore dimension of the o-ring gland as shown, and a thickness of about 50 micrometers serves well as a fuel-pressure and combustion-chamber monitor. It is preferred to apply electrodes to the faces that contact valve seat 54 and dielectric 64. If valve seat 54 is metallic and grounded by contact to case 72, a single insulated lead to an outside controller suffices for monitoring the pressure events of interest.

In the instance that a piezoelectric disk 63 is used it is preferred to select the material for making dielectric body 64 with sufficient Poisson displacement from forces exerted by fuel pressure to develop a substantial axial force and resulting piezoelectric signal on transducer disc 63. In this instance it is preferred to select a relatively low modulus of elasticity material such as unfilled ethylene tetrafluoroethylene rather than a stiffer material such as glass-fillcd polyphenylene sulfide.

Another suitable form of piezoelectric sensor is a right circular cylinder such as 65, 67, or 69 located as shown in Figure 9. Cylindrical piezoelectric transducers are available in outside diameters of 6.35 to 25.4 mm (0.25" to 1,00") with nominal wall thicknesses of 0.51 to 1.27 mm (.0.02" to 0.05") and in cylindrical lengths up to 300 mm or 12°. Such devices can be special ordered from Atochem Sensors, P.O. Box 799, Valley Forge, PA. 19482. Pressure transmitted from fuel passing through tubular space 61 and combustion-chamber pressure cycles cause piezoelectrics 65, 67, or 69 to generate electrical signals. Pressure rise and fall in the combustion chamber is transmitted through component assembly 55, 70, 72, and 64 to generate piezoelectric signals on transducers 62A, 63, 65, 67 and 69. This allows monitoring the combustion chamberto determine operating conditions such as intake, compression, power, and exhaust. Determining the approach to top dead center and the trend in piston speed as a result of fuel injection and ignition characteristics allows rapid optimization of fuel-injection and spark-ignition. This approach to pressure measurement and characterization of piston speed, fuel injection, ignition, and combustion provides faster and much more comprehensive control and optimization of engine processes than conventional approaches of instrumentation and control.

In operation, force transducer 63, force-detecting o-ring 62A. or transducers such as 65 are monitored by connection of their electrodes to a suitable electrical circuit for determining the occurrence of piezoelectric signals. Other suitable pressure transducers for determining the condition of combustion chambers served by the combination fuel injector and spark ignition device of Figure 9 include:
1. Fiber optic devices in which an interferometric cavity resonator is located between the end face of an optical fiber and a thin reflective silicon wafer chip. The chip acts as a diaphragm and flexes with differential pressure or with motion of surrounding materials that deform as a result of pressure within the fuel conduit and due to pressure within the combustion chamber. This flexing of the diaphragm changes the cavity depth as a function of the diaphragm's radius and modifies the overall spectral reflectance of the light relative to the pressure. Any of four basic variables of intensity, frequency, phase, or polarization may be selected to sense pressure by this fiber optic instrumentation. Intensity modulation is a simple illustration in which the total intensity of reflected light indicates the pressure of the fuel conduit and the combustion chamber. A suitable source for such a device is Fiber Optic Sensor Technologies of Ann Arbor, Michigan.
2. Polysilicon piezoelectric gage elements bonded by chemical vapor deposition or molecular bond adhesion to a temperature matched substrate such as tube 60 of Figure 2, or to the face of seat 54. Such devices are available from Rosemount, Inc of Eden Prairie, Minnesota, and from Dresser/Ashcroft of Stanford, Connecticut.
3. Capacitance sensors with two-way transmitters using fiber optics, smart, or fieldbus communications. All versions use a microcapacitance silicon sensor. Such devices are available from Fuji Instruments, Ltd. of Tokyo, Japan. See Figure 9 regarding 55 as a fiber optic coupling arrangement.
4. Ceramic diaphragms may be used in capacitance pressure sensors. Pressure sensors of this type are suitable and are available from Endress + Hauser Instruments of Greenwood, Indiana.
5. Tuning fork instrumentation to determine pressure as a change of frequency is suitable and such pressure transducers measure the natural frequency with piezoelectric elements. Such devices are available from Yokogawa Corporation of America in Newman, GA. 6. Fiber optic devices in which the intensity of reflected light is modified by a pressure deformable metallized mirror.

The end of the fiber is fitted with a diaphragm having a reflective surface that acts as a variable reflector. The diaphragm flexes with differential pressure or with motion of surrounding materials that deform as a result of pressure within the fuel conduit and due to pressure within the combustion chamber. This flexing of the diaphragm changes the amount of reflected light as a function of the diaphragm's radius and modifies the overall spectral reflectance of the light relative to the pressure.

In operation, transducer 63 develops a signal in response to pressurize increases within bore 61 as fuel passes to the combustion chamber. Detection and characterization of this fuel flow is an important diagnostic step in assuring precisely timed delivery of the fuel to the combustion chamber and in optimization of engine control. Combustion chamber events including intake, compression, stratified -charge fuel introduction, ignition, combustion, and expansion are monitored by one or more pressure transducers 62A, 63 and 65. It is preferred to control some engines with a behavior-based approach such as the Neuronal Group Selection disclosed by Wade 0. Troxell in a "A Robotic Assembly Description Language Derived from Task-achieving Behaviors" Proceedings, Manufacturing International '90. Atlanta, march 1990; and by Tim Smithers and Chris Malookn in "programming robotic assembly in terms oftask achieving behavioral modules" DAI Research Paper No. 417, Edinburgh University, Department of Artificial Intelligence, 1998; and by D.B. Kilielson, M. J. Pipho, and J.L. Franklin In "Dynamic Optimization of Spark Advance and Air-Fuel Ratio for a Natural Gas Engine" SAE paper 892142 in SP-798 Gaseous Fuels: Technology and Emissions, Society of Automotive Engineers, 1989. These references being incorporated herein. High speed engines driving lawn mowers, motor cycles, and hand tools that undergo rapid changes in speed and load are examples of instances where dynamic optimization is preferred.

Embodiments of the invention are also beneficial in combination with more traditional Adaptive Control Techniques by providing a very fast analysis of operations and trends. This fuel-injection and combustion-chamber information provides a much more intimate and instantaneous picture of engine operation than previous instrumentation. With instantaneous information, extremely rapid adaptive control optimization occurs for fuel injection and ignition parameters such as delivery timing, pressure, and penetration pattern. These parameters can be managed by the engine controller to produce very high fuel efficiencies and minimal oxides of nitrogen by plasma ignition of entering fuel in fuel-rich mixtures followed by completion of combustion in far excess air conditions with the result being reduced peak combustion temperature, reduced oxides of nitrogen, and faster completion of combustion to fully oxidized products of combustion. Application of the invention with adaptive control techniques is preferred in engines that operate for long periods with relatively slow changes in load and speed conditions. Examples are locomotives, barges and air planes in which the engines operate with relatively slow changes in load conditions and where two or more engines may be coupled to the same load and require speed matching. Fuel flow is compared to the flow and combustion results in other combustion chambers and is varied to produce the maximum brake mean effective pressure for the least fuel consumption and least emissions of pollutants. In addition to optimization, embodiments of the invention provides extremely rapid fail-safe monitoring to prevent damage to an engine due to a stuck open fuel control valve. For instance, if valve 48 or 82 should stick open the fuel pressure discrepancy in 61 would be immediately detected and characterized as an abnormal event and the fuel supply could be shut down or brought to a reduced pressure by controller 370 as shown in Figure 10 in a small fraction of the time that conventional control systems require. Excess fuel flow would be detected before other conventional instrumentation could detect a speed change in the crank shaft. This is an extremely important safety-assurance feature.

In conventional control systems for electronic fuel injection a stuck-open fuel control valve in a multiple cylinder engine would go undetected at least until the crank shaft or cam shaft changed speed and probably for many revolutions before being detected. In the present invention it would be detected in the first abnormal fuel pressure occurrence and the controller could determine the optimal course of action to accomplish the desires of the operator for best safe performance. Corrective action would occur on the next combustion chamber ready for fuel injection, ignition, and power production. Determination of discrepancies such as low fuel pressure are also provided by embodiments of the present invention. Partial plugging of individual fuel filters for each embodiment 40 can be compensated by providing longer fuel flow times in such combustion chambers. This aspect of the invention provides compensation or correction of partially performing sub-systems long before a change in engine performance could be detected by conventional approaches. By directly injecting fuel into each combustion chamber, correctional operation and maintenance of desired engine speed and torque production can be achieved much more rapidly than with previous approaches to fuel management in which homogeneous air/fuel mixtures are prepared in the intake system of the engine.

As provided in Figures 7 and 8, water is recovered from the exhaust stream of a combustion engine. This water can be electrolyzed to produce hydrogen. Any suitable electrolyzer may be used including types that allow production of mixtures of hydrogen and oxygen. A summary of electrolysis technology is found in the article "Intermediate Temperature Water Vapor Electrolysis" by M. Schriber, G. Lucier, J.A. Ferrante, and R.A. Huggins, Int. J. Hydrogen Energy, Vol. 16, No. 6, pp. 373-378, 1991. For vehicles that need peak engine performance by utilization of as much exhaust energy as possible in turbocharging the electrolyzer disclosed by J.F. McElroy in "SPE Regenerative Fuel Cells For Space and Marine Applications" pp. 282-285, Fuel Cell Seminar, November 1990 is preferred. It is preferred to use the embodiment shown in Figure 10 to reduce electrical energy requirements by recovery of waste heat.

Oxides of nitrogen are greatly reduced by using the instrumentation described and adaptive control system of Figures 9 and 10 for monitoring rapid combustion of fuel-rich zones within excess air envelopes under controlled fuel entry rates and local air-fuel ratios that keep peak combustion temperatures below 2204 deg C. (4,000 deg. F). Controlling fuel admission rate and ignition timing can limit peak temperatures to about 2204 deg C. (4,000 deg. F) and prevents formation of nitrogen-oxygen compounds such as NO. The invention makes it possible to correlate combustion pressure rise characteristics as detected by sensors conveys combustion chamber radiation to suitable photodetector 53. As shown light conducting material such as quartz, glass, or sapphire in the form of a fiber or coaxial sleeve 55 conveys light emissions from combustion to photo-electronic sensor 53 to monitor combustion as a function of the fuel characteristics, pressure of delivery, rate of fuel delivery, timing of injection, and timing of ignition. This information may be used as the individual control parameter or in conjunction with other sensors previously disclosed including 62A, 63, 65, 67, and 69.

Preventing the temperature of combustion from exceeding 2204 deg C. (4000 deg. F) is achieved by controller 370 as shown in Figure 10 using feedback from one or more sensors 62A, 65, 53, and/or 55 in the embodiment of Figure 9. In high production engines it is sufficient to determine the operating parameters for each fuel selection in panicular engines through dynamometer testing of power and emissions characteristics and development of a safe envelope of operating parameters including feedback from 62A, 63, or 65 which is compared with values from memory of the electronic controller as a map which has been previously referred to as Map A, Map B, and so forth.

Burning on an overall excess-air stratified-charge basis at temperature-limited conditions virtual eliminates production of oxides of nitrogen. Engines utilizing the present invention can be optimized for minimizing oxides of nitrogen while achieving best economy. Adjustment of the fuel-injection initiation timing, fuel-flow rate, and ignition timing with respect to the fuel-combustion characteristics, compression ratio, geometry, and dimensions of the combustion chamber allows production of optimum results such as minimum oxides of nitrogen, maximum power, maximum fuel economy r minimum operating noise. Feedback of the resulting temperature of combustion, piston speed, pressure rise, and presence of oxides of nitrogen in the exhaust allows adaptive controls to precisely control the engine. Suitable photo-electronic sensors 53 for determining the combustion chamber temperature include light-actuated semiconductors such as photo-diodes, photo-transistors, and photo-resistors. It is period the electrolyzer is reheated and the accumulator is charged to the design pressure to be ready for at least starting and warming the engine on hydrogen before introducing a fuel containing carbon. This mode of operation reduces unwanted exhaust emissions by up to 50 percent. For many motorists in stop and go traffic, the vehicle would be operated on hydrogen without the use of fossil fuels. This mode of operation reduces unwanted emissions by almost 100%.

It is preferred to operate the combustion engine with the special water-condensing turbocharger shown which consists of compressor 302, drive shaft 324, turbo-motor 326, stator 328, and turbo-motor 330. Condensed water is collected in centrifugal separator 332 and delivered to reservoir 331 as shown. Exhaust gases pass around electrolyzer 304 in a helical path as shown in section at 334, 336, 338, 340, and 342. This provides heat to electrolyzer 304 and helps insulate 304. Final insulation (not shown) is placed on the outside of the assembly to conserve heat. It is preferred to use a vacuum jacketed insulation system like the venerable thermos bottle. Exhaust gases enter the atmosphere through 376 as shown. It is anticipated that in certain applications, the embodiments of Figures 9 and 10 will be used in conjunction with the embodiments of Figures 7 or 8. The present invention assists virtually any fuel by improved combustion efficiency. The embodiments of Figures 2-10 can be used independently or in conjunction with standard fuel metering equipment such carburetors, throttle body injectors, and port injectors. In this instance it is generally preferred to operate at "lean burn" conditions that are too lean for spark ignition.

Although it is generally preferred to burn all of the fuel on a stratified basis, it has been found that using hydrogen produced by the embodiments of Figures 4-10 and delivered by the embodiment of Figure 9 dramatically improves combustion efficiency and power ratings of more inert traditional hydrocarbon fuels delivered by standard systems. This process of characterizing the combustion of more inert conventional fuels by the hydrogen-torch effect is valuable even at 2 percent or less heat delivery from the hydrogen. Using hydrogen to stimulate combustion of hydrocarbon fuels allows leaner burning of fuels than could be ignited by conventional spark plug approaches and increases the rate of molecular-cracking processes in which large hydrocarbons are broken into smaller fragments. Expediting production of smaller molecular fragments is beneficial in increasing the surface-to-volume ratio and consequent exposure to oxygen for completion of the combustion process. Improvements similar to those shown in Table 1 for methane-hydrogen mixtures are possible when hydrogen is used as a combustion stimulant with other hydrocarbons such as methanol, ethanol, gasoline, and diesel fuel. This is especially advantageous in lean-burn conditions. It is preferred to use 100 percent hydrogen on cold start, idle, and in polluted cities and to use engine-fuel or hydrogen-boosted fossil fuel if necessary for greater range.

Hydrogen burns in excess air to produce water vapor and very limited amounts of NOx depending upon the peak temperature of combustion as controlled by the optimization objective of controller 370. Worthy reductions in emissions of NOx, CO2, CO, HCx, and SO2, and particulates are possible when hydrogen is used as a substitute for nearly any portion of gasoline and diesel fuel. Tables 1 and 2 show comparisons of emissions from vehicles using the invention with various percentages of hydrogen and other fuels. It shows that relatively small amounts of hydrogen can dramatically reduce exhaust emissions of atmospheric pollutants and achieve stringent exhaust emission limits. As shown in Table 1, ultimately clean exhaust conditions can be met by increasing the percentage of hydrogen or engine-fuel. Use of hydrogen as a cold-start and pilot fuel for land-fill methane, natural gas, and sewer gas is encouraged. Conventional waste disposal practices that release large volumes of harmful greenhouse gases such as methane and carbon dioxide can be replaced by processes that collect renewable hydrogen and methane from land-fill and sewage treatment plants for use in cogeneration and transportation applications. Costly waste disposal practices that pollute the environment can become profit centers as clean-burning renewable hydrogen and methane are collected and marketed as renewable fuels that replace diesel and gasoline fuels.

It thus will be understood that the objects of this invention have been fully and effectively accomplished. It will be realized, however that the foregoing preferred specific embodiment has been shown and described for the purpose of illustrating the functional and structural principles of this invention and is subject to change without departure from such principles. Therefore, this invention includes all modifications encompassed within the scope of the following claims.

**TABLE 1: EMISSIONS TEST SUMMARY**

| TEST OR STANDARD | EMISSIONS, GRAMS PER MILE* | | |
|---|---|---|---|
| | RHC¹ | CO | NOₓ |
| 5% HYDROGEN, 95% METHANE² | 0.06 | 1.6 | 0.38 |
| 50% HYDROGEN, 50% METHANE² | 0.03 | 0.4 | 0.23 |
| 100% HYDROGEN² | 0.00 | 0.0 | 0.18 |
| CALIFORNIA TLEV³ | 0.125 | 3.4 | 0.4 |
| CALIFORNIA LEV⁴ | 0.075 | 3.4 | 0.2 |
| | RHC¹ | CO | NOₓ |
| CALIFORNIA ULEV⁵ | 0.040 | 1.7 | 0.2 |

| | | | |
|---|---|---|---|
| NOTES: 1. RHC = Reactive Hydrocarbons 2. % Hydrogen injected through spark-injector 40 3. Transitional Low Emission Vehicle (CARB) 4. Low Emission Vehicle (CARB) 5. Ultra Low Emission Vehicle (CARB) *CARB = California Air Resources Board | | | |

**TABLE 2: FUEL COMBUSTION CHARACTERISTICS**

| **FUEL** | **LOWER FLAME LIMIT** | **UPPER FLAME LIMIT** | **LOWER HEAT RELEASE (BTU/Ib)** | **HIGHER HEAT RELEASE (BTU/Ib)** | **AIR-FUEL RATIO** | **FLAME SPEED* (Ft/Sec.)** |
|---|---|---|---|---|---|---|
| HYDROGEN | 4% VOL. | 75% VOL. | 51,593 | 61,031 | 34.5 LBS/LB | 30,200 |
| CARBON MONOXIDE | 12 | 74.2 | 4,347 | 4,347 | 2.85 | |
| METHANE | 53 | 15 | 21,518 | 23,890 | 17.21 | 4,025 |
| ETHANE | 3 | 12.5 | 20,432 | 22,100 | 16.14 | 4,040 |
| PROPANE | 2.1 | 9.4 | 19,944 | 21,670 | 15.65 | 4,050 |
| BUTANE | 1.8 | 8.4 | 19,679 | 21,316 | 15.44 | 4,060 |
| BENZENE | 1.4 | 7.1 | 17,466 | 18,188 | 13.26 | 4,150 |
| METHANOL | 6.7 | 36.5 | 7,658 | 9,758 | 6.46 | 3,900 |
| ETHANOL | 3.2 | 19 | 9,620 | 12,770 | 8.99 | 4,030 |
| OCTANE | | | 19,029 | 20,529 | 15.11 | 4,280 |
| HEXANE | 1.18 | 7.4 | | | | 4,200 |
| GASOLINE | 1.0 | 7.6 | 18,900 | 20,380 | 14.9 | 4,010 |
| *At Atmospheric Pressure | | | | | | |

**TABLE 3: ENGINE-FUEL PRODUCTION**

| **REACTANTS** | **FEEDSTOCKS** | **ENGINE-FUEL** | |
|---|---|---|---|
| Methanol-Ethanol: | CH₃OH + C₂H₅OH + H₂O → | 3CO + 6H₂ | - Eqn. 1 |
| Methanol-Allyl Alcohol: | CH₃OH + C₃H₅OH + 2H₂O → | 4CO + 7H₂ | - Eqn. 2 |
| Methanol-Propanol: | CH₃OH + C₃H₇OH + 2H₂O → | 4CO + 8H₂ | - Eqn. 3 |
| Methanol-Butanol: | CH₃OH + C₄H₉OH + 3H₂O → | 5CO + 10H₂ | - Eqn. 4 |
| Ethanol-Amyl Alcohol: | C₂H₅OH +C₅H₁₁OH + 5H₂O→ | 7CO + 14H₂ | -Eqn. 5 |
| Methanol-Phenol^{[2]}: | CH₃OH + C₆H₆O + 5H₂O→ | 7CO + 10H₂ | - Eqn. 6 |
| 144-Proof Ethanol: | C₂H₅OH + H₂O → | 2CO + 4H₂ | - Eqn. 7 |
| "Black" Methanol (130-Proot): | C + H₂O + CH₃OH → | 2CO + 3H₂ | - Eqn. 8 |
| Methane-Steam: | CH₄ + H₂O → | CO + 3H₂ | - Eqn. 9 |
| Gasoline-Wet Methanol⁽³⁾ : | C₈H₁₆ + CH₃OH + 8H₂O → | 9CO + 19H₂ | - Eqn. 10 |
| Diesel-Wet Methanol: | C₉H₂₀ + CH₃OH + 9H₂O → | 10CO + 21 H₂ | - Eqn. 11 |
| Cyanoacetic Acid^{[4]} | C₃H₃NO₂ + H₂O → | 3CO + 2.5H₂ + .5N₂ | - Eqn. 12 |
| Ammonia | 2NH₃ → | N₂ + 3H₂ | -Eqn. 13 |
| Ammonium Hydroxide^{[5]} | 2NH₄OH → | N₂+ 3H₂ + 2H₂O | -Eqn. 14 |

| | | | |
|---|---|---|---|
| NOTES: 1. Equation 1 illustrates the opportunity to utilize greater biomass alcohol yields such as methanol from destructive distillation of ligno-cellulosic materials and fermentation of starches. Considerable water can be left in the crude alcohols to reduce refining costs. 2. Typical to the variety of compounds in partially-refined biomass and coal-tar fuels. 3. "Gasoline" typical to a mixture of components such as undecane, decane, nonane, octane, heptane, hexane, pentane, benzene, toluene, and (occasionally) fuel alcohols. 4. Typical to the variety of cyanocarbons and cyano-organic compounds, 5. Typical to the variety of ammonium compounds. | | | |

**TABLE 4: CATALYTIC MATERIAL SYSTEMS**

| BASE mat'l | CAT. mat'l | Ag* | Cu* | Zn* | Sn* | Si* | Mg* | Cd* | Al* | T.S. PSI | Y.S. PSI | ELG. % | Melt °F |
|---|---|---|---|---|---|---|---|---|---|---|---|---|---|
| - | Alloy Sheet | - | 95% | 5% | - | - | - | - | - | 30000 | 10000 | 40 | |
| - | Alloy Sheet | - | 80% | 20% | - | - | - | - | - | 38000 | 12000 | 52 | |
| - | Alloy Sheet | - | 70% | 30% | - | - | - | - | - | 40000 | 11000 | 85 | |
| - | Alloy Sheet | - | 70% | 28% | 2% | - | - | - | - | 53000 | 22000 | 63 | |
| - | Alloy Sheet | - | 60% | 35% | 1 % | 1% | - | - | 3% | 58000 | 25000 | 45 | |
| Fe*² | Hot Dip Coat | Hot Dip Coat - | 57% | 42% | 1% | - | - | - | - | - | - | - | 1640 |
| Cu*³ | Hot Dip Coat | 45% | 15% | 16% | - | - | - | 24% | - | - | - | - | 1135 |
| Al*⁴ | Hot Dip Coat | | 3% | 6% | - | 5% | 60% | - | 25% | - | - | - | 940 |
| Fe | HotDipCoat | 7% | 48% | 38% | 1% | 1% | 1% | 2% | 2% | | | | 1485 |
| Fe*¹ | Hot Dip Coat | 10% | 60% | 25% | | | | | | | | | 1205 |
| Fe | Hot Dip Coat | | 22% | 48% | | 1% | | 27% | 2% | | | | 1120 |
| NOTES: | | | | | | | | | | | | | |
| * = Composition of Catalysts | | | | | | | | | | | | | |
| *1 = Plus 5% Phosphorus | | | | | | | | | | | | | |
| *2 = Fe = low alloy and stainless steels | | | | | | | | | | | | | |
| *3 = Cu = Including brass, bronze, and monel alloys | | | | | | | | | | | | | |
| *4 = Al = Aluminum alloys | | | | | | | | | | | | | |
| Processing of Hot Dip Coatings May Require Inert, Vacuum, or Hydrogen Furnace Atmospheres | | | | | | | | | | | | | |
| Processing of Hot Dip Coatings May Require Inert, Vacuum, or Hydrogen Furnace Atmospheres | | | | | | | | | | | | | |

## Claims

1. A combined fuel injection and spark ignition device (40) adapted to be received in an opening to a combustion chamber of a cylinder of an internal combustion piston engine for injection of fuel into said chamber, said device comprising a passageway through which fuel may pass to enter said chamber, said passageway incorporating valve means, comprising an electromagnetically operated solenoid poppet (48), to control flow of fuel therethrough and terminating in an electrically conductive nozzle (70) associated with a sprung poppet comprising a movable element (88) shaped to deliver injected fuel into the combustion chamber, and said device further comprising spark points (82, 84), between which spark plasma may be developed, for effecting spark ignition of said fuel substantially at the location of its injection into said chamber, one of the spark points (82) comprising part of the movable element (88).

2. A device (40) as claimed in claim 1, wherein the other of the spark points (84) being formed on an electrode skirt (84) of the device (40).

3. A device (40) as claimed in claim 2, wherein the electrode skirt (84) forms part of a threaded component (86) that provides a seal to the combustion chamber.

4. A device (40) as claimed any preceding claim wherein said nozzle (70) and associated movable element (88) are designed to direct said fuel towards the rim of the piston of said cylinder when the piston is at near top dead centre.

5. A device (40) as claimed in any of the preceding claims wherein the spark points (82, 84) are adapted to provide substantially radially extending ignition sparks.

6. A device (40) as claimed in any of the preceding claims wherein said movable element (88) includes a convex conical or spherical geometry which sits in a concave conical or spherical valve seat (90) of said nozzle (70).

7. A device (40) as claimed in any of the preceding claims which further incorporates means (65, 66, 69) for sensing information relating to one or more of intake, compression, fuel pressure, fuel flow period, ignition, combustion, expansion, exhaust, piston location and temperature.

8. A device (40) as claimed in claim 7 wherein said means (65, 66, 69) for sensing information comprise a piezoelectric, fibre optic or capacitance transducer.

9. A device (40) as claimed in any of the preceding claims wherein said combustion chamber opening is the spark plug opening of a petrol engine or the fuel injector opening of a Diesel engine.

10. An internal combustion engine (100) having at least one combustion chamber provided with a fuel injection and spark ignition device (40) as claimed in any of the preceding claims.

11. An engine as claimed in claim 10 which is adapted for operation so that ignition sparks are generated throughout the duration of each injection of fuel into the combustion chamber.

12. An engine as claimed in claim 10 or claim 11 wherein the fuel injection and spark ignition device are as defined in claim 7 or claim 8 and the engine incorporates an adaptive controller for adjusting operation of the engine in response to the sensed information in order to optimise one or more of thermal efficiency, power production, engine smoothness, combustion temperature control and minimisation of formation of oxides of nitrogen.

13. An engine as claimed in any of claims 10 to 12 wherein the air intake is unthrottled.

## Patentansprüche

1. Kombinierte Kraftstoffeinspritz- und Funkenzündungsvorrichtung (40), die dazu ausgelegt ist, in einer Öffnung zu einer Verbrennungskammer eines Zylinders eines Verbrennungskolbenmotors zum Einspritzen von Kraftstoff in die Kammer aufgenommen zu werden, wobei die Vorrichtung einen Durchgang umfasst, durch welchen Kraftstoff fließen kann, um in die Kammer einzutreten, wobei der Durchgang Ventilmittel einschließt, mit einem elektromagnetisch betätigten Solenoidtellerventil (48) zum Steuern des Kraftstoffflusses durch dasselbe, und in einer elektrisch leitenden Düse (70) ausläuft, die einem gefederten Tellerventil zugeordnet ist, mit einem beweglichen Element (88), das so geformt ist, dass es eingespritzten Kraftstoff in die Verbrennungskammer zuführt, und die Vorrichtung weiterhin Funkenpunkte (82, 84) umfasst, zwischen welchen Funkenplasma erzeugt werden kann, um eine Funkenzündung des Kraftstoffs im Wesentlichen an der Stelle seiner Einspritzung in die Kammer zu bewirken, wobei einer der Funkenpunkte (82) einen Teil des beweglichen Elements (88) umfasst.

2. Vorrichtung (40) nach Anspruch 1, wobei der andere der Funkenpunkte (84) an einer Elektrodenumrandung (84) der Vorrichtung (40) ausgebildet ist.

3. Vorrichtung (40) nach Anspruch 2, wobei die Elektrodenumrandung (84) einen Teil einer Gewindekomponente (86) bildet, die eine Dichtung für die Verbrennungskammer darstellt.

4. Vorrichtung (40) nach irgendeinem vorhergehenden Anspruch, wobei die Düse (70) und das zugeordnete bewegliche Element (88) dazu entworfen sind, den Kraftstoff zum Rand des Kolbens des Zylinders zu lenken, wenn sich der Kolben nahe dem oberen Totpunkt befindet.

5. Vorrichtung (40) nach irgendeinem der vorhergehenden Ansprüche, wobei die Funkenpunkte (82, 84) dazu ausgelegt, im Wesentlichen radial verlaufende Zündfunken bereitzustellen.

6. Vorrichtung (40) nach irgendeinem der vorhergehenden Ansprüche, wobei das bewegliche Element (88) eine konvexe konische oder kugelförmige Geometrie hat, die in einem konkaven konischen oder kugelförmigen Ventilsitz (90) der Düse (70) sitzt.

7. Vorrichtung (40) nach irgendeinem der vorhergehenden Ansprüche, die weiter Mittel (65, 66, 69) zum Erfassen von Information beinhaltet, welche von Ansaugen, Verdichten, Kraftstoffdruck, Kraftstoffflussdauer, Zündung, Verbrennung, Ausdehnung, Ausstoßen, Kolbenstandort und Temperatur eine/s/n oder mehrere betrifft.

8. Vorrichtung (40) nach Anspruch 7, wobei die Mittel (65, 66, 69) zum Erfassen von Information einen piezoelektrischen, faseroptischen oder Kapazitätsumwandler umfassen.

9. Vorrichtung (40) nach irgendeinem der vorhergehenden Ansprüche, wobei die Verbrennungskammeröffnung die Zündkerzenöffnung eines Benzinmotors oder die Kraftstoffeinspritzdüsenöffnung eines Dieselmotors ist.

10. Verbrennungsmotor (100) mit zumindest einer Verbrennungskammer, die mit einer Kraftstoffeinspritz- und Funkenzündvorrichtung (40) nach irgendeinem der vorhergehenden Ansprüche versehen ist.

11. Motor nach Anspruch 10, der für einen Betrieb so ausgelegt ist, dass Zündfunken während der Dauer jeder Einspritzung von Kraftstoff in die Verbrennungskammer erzeugt werden.

12. Motor nach Anspruch 10 oder Anspruch 11, wobei die Kraftstoffeinspritz- und Funkenzündvorrichtung wie in Anspruch 7 oder Anspruch 8 definiert ist und der Motor eine adaptive Steuerung zum Einstellen des Motorbetriebs in Ansprechung auf die erfasste Information beinhaltet, um von Wärmeeffizienz, Leistungserzeugung, ruhigem Motorlauf, Verbrennungstemperatursteuerung und Minimierung der Bildung von Stickstoffoxiden eine(n) oder mehrere zu optimieren.

13. Motor nach irgendeinem der Ansprüche 10 bis 12, wobei die Luftansaugung ungedrosselt ist.

## Revendications

1. Un dispositif d'injection de carburant et d'allumage par étincelle combiné (40) adapté pour être reçu dans une ouverture donnant sur une chambre de combustion d'un cylindre d'un moteur à combustion interne à piston pour l'injection du carburant dans la chambre, le dispositif comprenant un passage par lequel le carburant peut passer pour entrer dans la chambre, le passage étant muni d'une soupape, équipée d'un champignon à solénoïde à fonctionnement électromagnétique (48), pour contrôler le débit de carburant et se terminant dans une buse électriquement conductrice (70) associée à un champignon à ressort comprenant un élément amovible (88) possédant une forme lui permettant de faire entrer le carburant injecté dans la chambre de combustion et le dispositif comprenant également des points d'allumage (82, 84), entre lesquels le plasma d'allumage peut être développé, pour effectuer l'allumage par étincelle du carburant sensiblement à l'endroit de son injection dans la chambre, un des points d'allumage (82) comprenant une partie de l'élément amovible (88).

2. Un dispositif (40) selon la revendication 1, dans lequel l'autre des points d'allumage (84) est formé sur une jupe d'électrode (84) du dispositif (40).

3. Un dispositif (40) selon la revendication 2, dans lequel la jupe d'électrode (84) fait partie d'un composant fileté (86) qui offre un joint d'étanchéité à la chambre de combustion.

4. Un dispositif (40) selon n'importe laquelle des revendications précédentes, dans lequel la buse (70) et l'élément amovible associé (88) sont conçus pour diriger le carburant vers le bord du piston du cylindre lorsque le piston est proche de son point mort supérieur.

5. Un dispositif (40) selon n'importe laquelle des revendications précédentes, dans lequel les points d'allumage (82, 84) sont adaptés pour fournir des étincelles d'allumage s'étendant pour l'essentiel radialement.

6. Un dispositif (40) selon n'importe laquelle des revendications précédentes, dans lequel l'élément amovible (88) possède une géométrie sphérique ou conique convexe placée dans un siège de soupape sphérique conique concave (90) de la buse (70).

7. Un dispositif (40) selon n'importe laquelle des revendications précédentes comprenant également un dispositif (65, 66, 69) permettant de détecter les informations liées à un ou plusieurs des éléments suivants : admission, compression, pression du carburant, période de débit du carburant, allumage, combustion, expansion, échappement, emplacement du piston et température.

8. Un dispositif (40) selon la revendication 7, dans lequel le dispositif (65, 66, 69) de détection des informations comprend un transducteur piézo-électrique, à fibres optiques ou capacitif.

9. Un dispositif (40) selon n'importe laquelle des revendications précédentes, dans lequel l'ouverture de la chambre de combustion est l'ouverture de la bougie d'allumage d'un moteur à essence ou l'ouverture de l'injecteur de carburant d'un moteur diesel.

10. Un moteur à combustion interne (100) ayant au moins une chambre de combustion munie d'un dispositif d'injection de carburant et d'allumage par étincelle (40) comme décrit dans n'importe laquelle des revendications précédentes.

11. Un moteur selon la revendication 10 adapté pour fonctionner de telle manière que les étincelles d'allumage soient générées pendant toute la durée de chaque injection de carburant dans la chambre de combustion.

12. Un moteur selon les revendications 10 ou 11, dans lequel le dispositif d'injection de carburant et d'allumage par étincelle est conforme aux revendications 7 ou 8 et le moteur comporte un contrôleur adaptatif permettant d'ajuster le fonctionnement du moteur en réponse aux informations détectées afin d'optimiser un ou plusieurs des éléments suivants : rendement thermique, production d'énergie, fonctionnement sans à-coups du moteur, régulation de la température de combustion et réduction au minimum de la formation d'oxydes d'azote.

13. Un moteur selon n'importe laquelle des revendications 10 à 12, dans lequel l'admission d'air fonctionne sans papillon.
